(19) Europäisches Patentamt
European Patent Office
Office européen des brevets

(11) **EP 4 289 590 A1**

(12) **EUROPEAN PATENT APPLICATION**
published in accordance with Art. 153(4) EPC


(43) Date of publication:
**13.12.2023 Bulletin 2023/50**

(21) Application number: **22749703.9**

(22) Date of filing: **01.02.2022**

(51) International Patent Classification (IPC):
***B29C 41/14*** $^{(2006.01)}$ ***C08K 5/098*** $^{(2006.01)}$
***C08L 13/00*** $^{(2006.01)}$ ***A41D 19/04*** $^{(2006.01)}$

(52) Cooperative Patent Classification (CPC):
**A41D 19/04; B29C 41/14; C08K 5/098; C08L 13/00**

(86) International application number:
**PCT/JP2022/003838**

(87) International publication number:
**WO 2022/168831 (11.08.2022 Gazette 2022/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.02.2021 JP 2021016702**



(71) Applicant: **Midori Anzen Co., Ltd.**
**Tokyo 150-8455 (JP)**

(72) Inventors:
- **ENOMOTO Norihide**
  **Tokyo 150-8455 (JP)**
- **SATAKE Shoya**
  **Tokyo 150-8455 (JP)**
- **TSUNEISHI Taku**
  **Kakogawa-shi, Hyogo 675-0124 (JP)**
- **MAEDA Ryo**
  **Kakogawa-shi, Hyogo 675-0124 (JP)**
- **ISHIHARA Shun**
  **Kakogawa-shi, Hyogo 675-0124 (JP)**

(74) Representative: **Ström & Gulliksson AB**
**P.O. Box 4188**
**203 13 Malmö (SE)**


(54) **ALUMINUM CROSSLINKING AGENT FOR DIP MOLDING, DIP MOLDING COMPOSITION, GLOVES, AND METHOD FOR PRODUCING GLOVES**


(57) An aluminum crosslinking agent for dip molding, which does not cause gelation in a dip molding composition, has a sufficient stability enabling use even in mass production of glove production and the like, and makes it possible to provide a molded body obtained using the aluminum crosslinking agent, which has sufficient tensile strength and fatigue durability and is soft and elongating; a dip molding composition; gloves, and a method for producing gloves are provided. These are an aluminum crosslinking agent for dip molding, including a polynuclear aluminum lactate compound, in which the polynuclear aluminum lactate compound has a polynuclear aluminum structure and at least one lactic acid residue, the polynuclear aluminum structure has a structure where a plurality of aluminum atoms are polymerized through one oxygen atom, and has a degree of polymerization of 2 to 20, and lactic acid residues or hydroxyl groups are bonded to remaining valences of the aluminum atom; and a dip molding composition, gloves, and a method for producing gloves, each using the aluminum crosslinking agent for dip molding.


FIG. 11

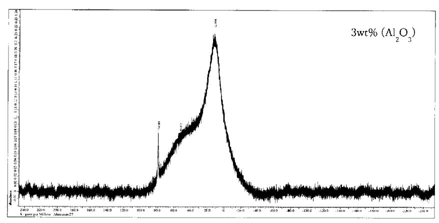


EP 4 289 590 A1

## Description

[Technical Field]

The present invention relates to a technique for producing a molded body by subjecting a copolymer elastomer to aluminum crosslinking by a dip molding method.

[Background Art]

In the related art, rubber gloves molded from synthetic rubber such as a copolymer elastomer by a dip molding method, typified by XNBR gloves molded using carboxy-modified acrylonitrile-butadiene rubber (XNBR), have been widely used instead of natural rubber gloves that cause Type I allergies to develop.

In the related art, the XNBR gloves have been customarily molded by crosslinking with sulfur, a vulcanization accelerator, and zinc oxide. However, since the vulcanization accelerator causes Type IV allergies to develop, accelerator-free XNBR gloves which do not use the vulcanization accelerator have been developed as an alternative in recent years.

Examples of these accelerator-free XNBR gloves include those in which components of a latex themselves have self-crosslinking properties and those in which the components of the latex are crosslinked with an organic crosslinking agent such as a polycarbodiimide compound or an epoxy compound. However, in order to allow any of these to have strength, zinc crosslinking is used in combination therewith. It is preferable not to use a heavy metal such as zinc as much as possible for gloves and the like which are in contact with the skin for a long time.

Furthermore, a method for dip molding XNBR gloves by aluminum crosslinking has also been developed. The method was aimed to be accelerator-free and eliminate zinc crosslinking.

However, a problem with dip-molded aluminum-crosslinked gloves is that the aluminum atoms are gelled in a dipping liquid at a pH of 9 to 11. In order to solve this problem, there are two major lines of development.

The first line is a method of starting with aluminic acid at a pH of about 13 and adding a stabilizer thereto to perform dip molding.

Patent Document 1 discloses aluminum or an aluminum-based compound, and polyethylene glycol as a stabilizer.

Patent Document 2 discloses an aluminum compound and an alcoholic hydroxyl group-containing compound (C) as a stabilizer. As (C), sugars, sugar alcohols, hydroxy acids, and hydroxy acid salts are also disclosed.

Patent Document 3 discloses nitrile gloves made from a carboxylated acrylonitrile-butadiene latex mixture, in which the nitrile gloves include an aluminate compound, zinc oxide, or a mixture thereof as a metal ion crosslinking agent, a chelating agent, a polyol compound, or a mixture thereof as a metal ion stabilizer, and a predetermined alkali salt compound as a pH adjuster, and further include calcium carbonate, silica, or a mixture thereof as a filler, and sodium aryl sulfonate, sodium polyacrylate, or a mixture thereof as a filler dispersant, each in a predetermined amount with respect to the carboxylated acrylonitrile-butadiene elastomer.

With this technique, nitrile gloves are produced using the aluminate compound for a reaction with a calcium carbonate or silica filler to form a calcium-aluminum cement composite bonded to the carboxylated acrylonitrile-butadiene polymer chain. In Examples of this patent document, for example, sodium aluminate is mixed with citric acid and glycerin as a stabilizer, and glyoxal and sorbitol are mixed under heating.

The second line is a method of starting with an aluminum salt at a pH of about 2 to 4, and adding a stabilizer thereto to perform dip molding.

Patent Document 4 discloses a carboxyl group-containing diene-based rubber latex, and a carboxyl group-containing diene-based rubber latex composition including an organometallic crosslinking agent containing two or more hydroxyl groups bonded to a metal atom. Examples of the metal atom of the organometallic crosslinking agent include aluminum, and the structural formula of an organoaluminum crosslinking agent having one carboxylic acid residue and two hydroxyl groups per aluminum atom such as, for example, the structural formula of (dihydroxy)aluminum monocarboxylate is disclosed (Chemical Structure 1). Furthermore, it is described that the organoaluminum crosslinking agent crosslinks the carboxyl groups of the polymer through the two hydroxyl groups. In addition, an organometallic crosslinking agent having a plurality of aluminum atoms is disclosed (Chemical Structures 2 to 4).

Patent Document 5 discloses a ligand-bonded crosslinking agent which is a water-soluble aluminum organometallic compound of a polybasic hydroxycarboxylic acid, is a carboxyl group crosslinking agent having two or more hydroxyl groups bonded to an aluminum atom, and has two or more aluminum atoms.

Patent Document 6 discloses products, such as various elastomeric products, composed of a carboxylated base polymer including aliphatic conjugated diene monomers and an aluminum compound including retarding anions. As the aluminum compound, a hydroxy-substituted aluminum, specifically aluminum lactate and aluminum glycolate are disclosed.

[Citation List]

[Patent Documents]

[Patent Document 1]
Japanese Patent No. 6538093
[Patent Document 2]
PCT International Publication No. WO2017/146238
[Patent Document 3]
Japanese Unexamined Patent Application, First Publication No. 2018-9272
[Patent Document 4]
PCT International Publication No. WO2008/001764
[Patent Document 5]
Japanese Unexamined Patent Application, First Publication No. 2010-209163
[Patent Document 6]
Japanese Unexamined Patent Application, First Publication No. 2009-138194

[Summary of Invention]

[Technical Problem]

In the related art, in the case where aluminum is used as a crosslinking agent, a problem of gelation cannot be sufficiently solved in some cases. For example, it was considered that in the case where the technique of Patent Document 1 is used, polyethylene glycol has a weak stabilizing function and causes gelation easily.

In addition, in the case where an aluminum crosslinking agent having a compound including one aluminum atom as a main component was used, the tensile strength was excellent, whereas in the case where the amount of the aluminum crosslinking agent was increased, there was a drawback in that the molded body was stiff and non-elongating.

Patent Document 2 discloses an aluminum compound as an aluminum crosslinking agent, and an alcoholic hydroxyl group-containing compound (C) as a stabilizer, and also broadly discloses sugars, sugar alcohols, hydroxy acids, and hydroxy acid salts as (C). On the other hand, in Examples of this patent document, only sodium aluminate is used as the aluminum crosslinking agent, and is mixed with sorbitol and/or sodium glycolate as a stabilizer. That is, in this case, a compound including only one aluminum atom in one molecule was used as the aluminum crosslinking agent.

Patent Document 3 relates to a formulation for overcoming the drawback of nitrile gloves which cannot carry a high dose of a filler, which is a technique aimed at using an aluminate compound as a crosslinking agent and uses an aluminate compound including one aluminum atom as a crosslinking agent.

Patent Document 6 discloses hydroxy-substituted aluminum, specifically aluminum lactate and aluminum glycolate as an aluminum compound corresponding to a crosslinking agent. Any of these are usually compounds including only one aluminum atom.

With these techniques, it was not possible to overcome the drawback of the aluminum crosslinking agent being stiff and non-elongating.

In addition, the crosslinking agent using a structure crosslinked by hydroxyl groups bonded to an aluminum atom cannot form a strong crosslinked structure in the case of being formed into a molded body, and stronger physical properties of the molded body may be required.

Patent Document 4 discloses an organometallic crosslinking agent having a plurality of aluminum atoms, but describes that the organoaluminum crosslinking agent crosslinks carboxyl groups of a polymer with two hydroxyl groups and any of those have the crosslinking achieved only by a plurality of hydroxyl groups bonded to an aluminum atom.

Patent Document 5 discloses a water-soluble aluminum citrate complex $[Al_3(H_{-1}Cit)_3(OH)(H_2O)]^{4-}$) as an aluminum compound. In addition, in the case of having one hydroxyl group and three citric acid residues bonded to Al, the carboxyl groups cannot be crosslinked even in the case of being blended in a polymer, for example, XNBR for use as a crosslinking agent since there is only one hydroxyl group. Also in this technique, it is essential to use an organoaluminum crosslinking agent in which two or more hydroxyl groups are bonded to an aluminum atom and the crosslinking is achieved only by a plurality of hydroxyl groups bonded to an aluminum atom. Therefore, stronger crosslinked structures and molded bodies are required.

In view of such problems, the present inventors made intensive studies with an object to provide an excellent aluminum crosslinking agent for producing a molded body by dip molding. Furthermore, the present inventors aimed to eliminate the instability of the aluminum crosslinking agent in a dip molding composition and to achieve a stronger

crosslinking by aluminum crosslinking. In addition, the present invention has an object to eliminate the drawback of being stiff and non-elongating due to the bonding strength of the aluminum crosslinking.

The present invention has been made in view of such problems, and has an object to provide gloves which have sufficient stability so that the gloves can be used in mass production such as glove production without gelation in a dip molding composition, and enable a molded body made therefrom to have sufficient tensile strength and fatigue durability, and to be softer and more elongating than aluminum-crosslinked molded bodies in the related art; and a method for producing the gloves. Furthermore, another object of the present invention is to develop an aluminum crosslinking agent for dip molding and a dip molding composition, which are indispensable for achieving the obj ect.

[Solution to Problem]

[1] An aluminum crosslinking agent for dip molding, including a polynuclear aluminum lactate compound, in which the polynuclear aluminum lactate compound has a polynuclear aluminum structure and at least one lactic acid residue, the polynuclear aluminum structure has a structure where a plurality of aluminum atoms are polymerized through one oxygen atom, and has a degree of polymerization of 2 to 20, and lactic acid residues or hydroxyl groups are bonded to remaining valences of the aluminum atom.
[2] The aluminum crosslinking agent for dip molding, in which the degree of polymerization is 2 to 10.
[3] The aluminum crosslinking agent for dip molding, in which in the case where the aluminum atom has two remaining valences, the lactic acid residues are bonded to one or more of the remaining valences.
[4] The aluminum crosslinking agent for dip molding, in which a molar ratio of the aluminum atoms to the lactic acid residues is 1:0.5 to 1:2.0.
[5] A dip molding composition having a pH of 8.5 to 10.5, the dip molding composition including at least the aluminum crosslinking agent for dip molding, a copolymer elastomer, a pH adjuster, and water, in which the copolymer elastomer includes 20% to 35% by mass of (meth)acrylonitrile-derived structural units, 1.5% to 6% by mass of ethylenically unsaturated carboxylic acid-derived structural units, and 59% to 78.5% by mass of butadiene-derived structural units.
[6] The dip molding composition, further including an organic crosslinking agent or zinc oxide.
[7] The dip molding composition, in which the aluminum crosslinking agent for dip molding is included in an amount of 0.2 to 1.3 parts by mass in terms of aluminum oxide with respect to 100 parts by mass of the copolymer elastomer.
[8] Gloves formed by molding a constituent material including the dip molding composition.
[9] A method for producing the gloves, including:

(1) a coagulant-attaching step of attaching a coagulant to a glove mold,
(2) a maturing step of preparing and stirring a dip molding composition,
(3) a dipping step of immersing the glove mold in the dip molding composition,
(4) a gelling step of gelling a film formed on the glove mold to make a cured film precursor,
(5) a leaching step of removing impurities from the cured film precursor formed on the glove mold,
(6) a beading step of making rolls around cuffs of the gloves formed by the steps, and
(7) a curing step of heating the gloves to be subjected to a crosslinking reaction and drying,

in which steps (3) to (7) are performed in this order.

In addition, embodiments of the present invention also have the following aspects.

[A1] An aluminum crosslinking agent for dip molding, including a compound represented by Formula (1A):

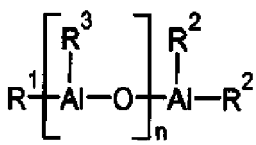 ... (1A)

(in Formula (1A), $R^1$ and $R^2$ each represents either of a hydroxy acid residue and a hydroxyl group, and $R^3$ represents any of a hydroxy acid residue, a hydroxyl group, and -O-Al-$(R^3)_2$, n represents an integer of 1 to 6, and the total number of Al atoms is 2 to 7),
the compound having at least two hydroxy acid residues and at least one hydroxyl group.
[A2] The aluminum crosslinking agent for dip molding, in which in Formula (1A), $R^1$ is the hydroxy acid residue, and

either of $R^2$ and $R^3$ present at the other terminal of the main chain having $R^1$ as a terminal is the hydroxy acid residue.
[A3] The aluminum crosslinking agent for dip molding, in which in Formula (1A), n is an integer of 1 to 3 and the total number of Al atoms is 2 to 4.
[A4] The aluminum crosslinking agent for dip molding, in which the hydroxy acid residue is a lactic acid residue.
[A5] A dip molding composition having a pH of 9.5 to 10.5, the dip molding composition including at least a copolymer elastomer including 20% to 35% by mass of (meth)acrylonitrile-derived structural units, 1.5% to 6% by mass of ethylenically unsaturated carboxylic acid-derived structural units, and 59% to 78.5% by mass of butadiene-derived structural units, an aluminum crosslinking agent for dip molding, a pH adjuster, and water, in which the aluminum crosslinking agent for dip molding includes a compound represented by Formula (1A):

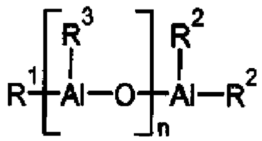 ... (1A)

(in Formula (1A), $R^1$ and $R^2$ each represents either of a hydroxy acid residue and a hydroxyl group, and $R^3$ represents any of a hydroxy acid residue, a hydroxyl group, and -O-Al-$(R^3)_2$, n represents an integer of 1 to 6, and the total number of Al atoms is 2 to 7),
the compound having at least two hydroxy acid residues and at least one hydroxyl group.
[A6] The dip molding composition, in which in Formula (1A), $R^1$ is the hydroxy acid residue and either of $R^2$ and $R^3$ present at the other terminal of the main chain having $R^1$ as a terminal is the hydroxy acid residue.
[A7] The dip molding composition, in which, in Formula (1A), n is an integer of 1 to 3 and the total number of Al atoms is 2 to 4.
[A8] The dip molding composition, in which the hydroxy acid residue is a lactic acid residue.
[A9] The dip molding composition, further including an organic crosslinking agent.
[A10] The dip molding composition, in which the aluminum crosslinking agent for dip molding is included in an amount of 0.2 to 1.3 parts by mass in terms of aluminum oxide with respect to 100 parts by mass of the copolymer elastomer.
[A11] A method for producing the gloves, including:

(a) a coagulant-attaching step of attaching a coagulant to a glove mold,
(b) a maturing step of preparing and stirring a dip molding composition having a pH of 9.5 to 10.5, the dip molding composition including at least a carboxy-modified acrylonitrile-butadiene rubber including 20% to 35% by mass of (meth)acrylonitrilederived structural units, 1.5% to 6% by mass of ethylenically unsaturated carboxylic acid-derived structural units, and 59% to 78.5% by mass of butadiene-derived structural units, and an aluminum crosslinking agent for dip molding, including at least a compound represented by Formula (1):

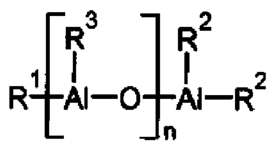 ... (1A)

(in Formula (1A), $R^1$ and $R^2$ each represents either of a lactic acid residue and a hydroxyl group, $R^3$ represents any of a lactic acid residue, a hydroxyl group, and -O-Al-$(R^3)_2$, n represents an integer of 1 to 6, and the total number of Al atoms is 2 to 7),
the compound having at least two lactic acid residues and at least one hydroxyl group, a pH adjuster, and water,
(c) a dipping step of immersing the glove mold in the dip molding composition,
(d) a gelling step of gelling a film formed on the glove mold to make a cured film precursor,
(e) a leaching step of removing impurities from the cured film precursor formed on the glove mold,
(f) a beading step of making rolls around cuffs of the gloves formed by the steps, and
(g) a curing step of heating and drying the gloves at a temperature required for a crosslinking reaction,
in which steps (c) to (g) are performed in this order.

[A12] Gloves formed by crosslinking a carboxy-modified acrylonitrile-butadiene rubber including 20% to 35% by mass of (meth)acrylonitrile-derived structural units, 1.5% to 6% by mass of ethylenically unsaturated carboxylic acid-derived structural units, and 59% to 78.5% by mass of butadiene-derived structural units, using an aluminum

crosslinking agent for dip molding, including a compound represented by Formula (1A):

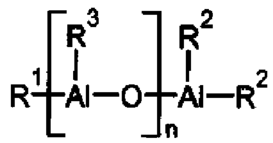 ... (1A)

(in Formula (1A), $R^1$ and $R^2$ each represents either of a hydroxy acid residue and a hydroxyl group, and $R^3$ represents any of a hydroxy acid residue, a hydroxyl group, and -O-Al-$(R^3)_2$, n represents an integer of 1 to 6, and the total number of Al atoms is 2 to 7), the compound having at least two hydroxy acid residues and at least one hydroxyl group.

[Advantageous Effects of Invention]

According to the present invention, it is possible to provide gloves which have sufficient stability so that the gloves can be used in mass production such as glove production without gelation in a dip molding composition by using the aluminum crosslinking agent for dip molding including the polynuclear aluminum lactate compound of the present invention, and enables a molded body made therefrom to have sufficient tensile strength and fatigue durability and to be softer and more elongating than aluminum-crosslinked molded bodies in the related art; and a method for producing the gloves.

[Brief Description of Drawings]

FIG. 1 is an NMR chart of a polynuclear aluminum lactate compound at pH of about 9.66.
FIG. 2 is an NMR chart of a polynuclear aluminum lactate compound at a pH of about 4.63.
FIG. 3 is an NMR chart of a polynuclear aluminum lactate compound at a pH of about 12.39.
FIG. 4 is an NMR chart of an aluminum lactate normal salt at a pH of about 3.44.
FIG. 5 is an NMR chart of an aluminum lactate normal salt at a pH of about 9.82.
FIG. 6 is an NMR chart of an aluminum lactate normal salt at a pH of about 13.54.
FIG. 7 is an NMR chart of sodium aluminate in heavy water ($D_2O$) at a pH of about 13.
FIG. 8 is an NMR chart of a mixture of sodium aluminate and sodium lactate (stabilizer) at a pH of about 13.08.
FIG. 9 is an NMR chart of a mixture of sodium aluminate and potassium glycolate (stabilizer) at a pH of about 12.82.
FIG. 10 is an NMR chart of a mixture of sodium aluminate and sorbitol (stabilizer) at a pH of about 12.46.
FIG. 11 is an NMR chart of a mixture of sodium aluminate and sorbitol (stabilizer) at a pH of about 9.98.
FIG. 12 is a graph showing a comparison of the results of mass spectrometry of a polynuclear aluminum lactate compound and the results of mass spectrometry of a normal salt of aluminum lactate in the present Examples.
FIG. 13 is another result of mass spectrometry of a polynuclear aluminum lactate compound of the present Examples.

[Description of Embodiments]

1. Aluminum Crosslinking Agent for Dip Molding

The aluminum crosslinking agent for dip molding of the present embodiment includes a polynuclear aluminum lactate compound. The above-mentioned polynuclear aluminum lactate compound has a polynuclear aluminum structure and at least one lactic acid residue.

The polynuclear aluminum structure refers to a plurality of aluminum atoms being polymerized through oxygen atoms. This polynuclear aluminum structure forms a molecular chain in the polynuclear aluminum lactate compound.

Having at least one lactic acid residue refers to at least one site of the polynuclear aluminum structure being substituted with a lactic acid residue. Lactic acid residues or hydroxyl groups as crosslinking moieties are bonded to remaining valences of the aluminum atom. In the case where a plurality or more of aluminum atoms are polymerized through oxygen atoms in the polynuclear aluminum structure described above, the remaining valence is a valence corresponding to a bonding site other than the bonding site bonded to oxygen in the aluminum atom. The lactic acid residue refers to a remaining portion obtained by removing one hydrogen ion from one carboxyl group of a lactic acid. In the case where one aluminum atom has two remaining valences, it is preferable that lactic acid residues be bonded to one or more of the remaining valences.

An example of the chemical structure representing the polynuclear aluminum lactate compound is shown in

Formula (1).

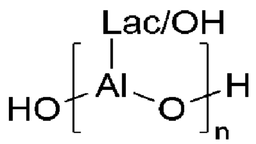

··· (1)

(Lac in the formula represents a lactic acid residue, and the abundance ratio of Al and Lac depends on the amounts of the aluminum source and the lactic acid added during synthesis.)

In addition, the polynuclear aluminum lactate compound of the present embodiment has a degree of polymerization of 2 to 20 in the polynuclear aluminum structure where a plurality of aluminum atoms are polymerized through one oxygen atom. The degree of polymerization is preferably 2 to 10.

The molecular chain in the polynuclear aluminum lactate compound has a structure where aluminum atoms and oxygen atoms are alternately bonded. The compound may be linear or branched.

The polynuclear aluminum lactate compound has at least one lactic acid residue in one molecule. In the case where the aluminum atom in the polynuclear aluminum lactate compound has two remaining valences, it is preferable that lactic acid residues be bonded to one or more of the remaining valences. More preferably, the polynuclear aluminum lactate compound has at least two lactic acid residues, with one of the lactic acid residues existing at each of both terminal parts of the molecular chain.

Examples of the polynuclear aluminum lactate compound having a hydroxy residue at a terminal part are shown in Formula (2).

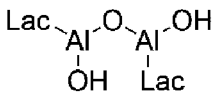

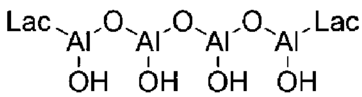

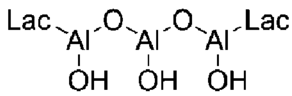

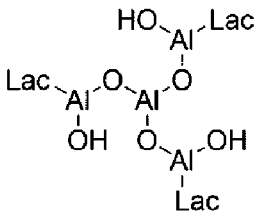

··· (2)

The above-mentioned molar ratio of the aluminum atoms to the lactic acid residues is preferably 1:0.5 to 1:2.0. It is considered that by setting the aluminum atoms and the lactic acid residues to be included at this molar ratio, an effect of preventing gelation by protecting the aluminum atoms with the lactic acid residues, as will be described later, can be favorably obtained. In addition, in the case where the polynuclear aluminum lactate compound of the present embodiment is used for a molded body, a strong crosslinked structure due to a lactic acid described later can be obtained due to the lactic acid.

The technical features of the aluminum crosslinking agent for dip molding including the polynuclear aluminum lactate compound of the present embodiment will be described below.

Firstly, the polynuclear aluminum lactate compound is stabilized through a process following a dip molding method, that is, a maturating and dipping step in a dipping liquid at a pH of 8.5 to 10.5. The reason thereof is considered to be that gelation is prevented through addition of hydroxide ions present in the dip molding composition to aluminum atoms by allowing the aluminum atoms to be sterically protected with the lactic acid residues due to an intermolecular force between the hydroxyl group and the aluminum atom, as in a polynuclear aluminum lactate compound of Formula (3), under alkali in the dip molding composition.

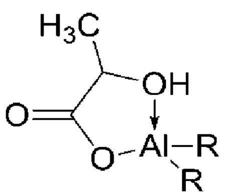

··· (3)

(R: a lactic acid residue, a hydroxyl group, or an aluminum skeleton (O-Al). The aluminum skeleton includes an aluminum skeleton having a lactic acid residue bonded thereto.)

On the other hand, aluminum compounds such as sodium aluminate and aluminum chloride tend to be gelled (polymerized) and precipitate in weakly acidic to alkaline conditions (pH 6.0 to 11.0), and thus, problems such as generation of defective molding have occurred since the dipping liquid in a step of producing a molded body is weakly alkaline (a pH of 8.0 to 11.0). In addition, since these aluminum compounds cause precipitation in the case of a change in pH, for example, by absorbing carbon dioxide in the air, there has also occurred a problem in the long-term storage of the crosslinking agent. As a countermeasure therefor, for example, as disclosed in Patent Documents 1, 2, and 3, many stabilizers having chelating properties, such as polyethylene glycol, sodium glycolate, sorbitol, and glyoxal, have been proposed as a stabilizer for aluminates such as sodium aluminate, but the problem of gelation could not be completely solved and there were problems, for example, in that both tensile strength and elongation cannot be accomplished. However, this problem is solved by using the polynuclear aluminum lactate compound of the present embodiment. Furthermore, another advantage of the polynuclear aluminum lactate compound having a lactic acid residue is that the polynuclear aluminum lactate compound improves the affinity with water, and can thus be dissolved and dispersed well in water due to the presence of the hydroxyl group and -COO-.

Secondly, the aluminum crosslinking agent for dip molding, including a polynuclear aluminum lactate compound, can produce a molded body having a strong crosslinked structure by dip molding, compared with other aluminum crosslinking agents, and at the same time, it can reduce $Ca^{2+}$ ions derived from the coagulant, $K^+$ ions derived from the pH adjuster, and $Na^+$ ions which weaken the physical properties of the molded body, from the molded body.

Hereinbelow, a speculative reaction in which the above-mentioned crosslinking agent crosslinks the copolymer elastomers, specifically the crosslinking reaction between the polynuclear aluminum lactate compound and XNBR will be described.

Furthermore, the following description will be made with regard to a case where one lactic acid residue is bonded to each aluminum atom of a branched chain composed of three aluminum atoms, and hydroxyl groups are bonded to the remaining ones, which is an example of the polynuclear aluminum lactate compound. However, the following description is not limited to this example, and also applies to polynuclear aluminum lactate compounds other than this example.

The polynuclear aluminum lactate compound immediately causes a reaction shown in Formula (4) with the carboxyl group of XNBR in the maturing step of preparing and stirring the dip molding composition.

That is, in the polynuclear aluminum lactate compound, the lactic acid residue present at a terminal part serves as a leaving group, and thus, undergoes an exchange reaction with the carboxylate ($COO^-$) of XNBR for the bonding. The lactic acid residue that has left is bonded to $K^+$, $Na^+$, and NH4+ which are counter ions of the carboxylate of XNBR.

The above-mentioned carboxylate of XNBR is present at and near an interface of the XNBR particles (particles including the molecules of XNBR described later in detail), and the dip molding composition is adjusted to a pH of 8.5 to 10.5, bringing about forms of carboxylates ($-COO^-$) that are aligned toward the outside of the particles.

Due to the reaction of Formula (4), the polynuclear aluminum lactate compound is bonded strongly to the XNBR particles, so that it hardly flows out even with water washing in the dipping step or the leaching step which is a subsequent step. Therefore, crosslinking by aluminum in the subsequent curing step can be efficiently performed.

In addition, the carboxylate of XNBR bonded to the polynuclear aluminum lactate compound does not react with $K^+$ or $NH_4^+$ derived from the pH adjuster, $Na^+$ derived from the dispersant, or $Ca^{2+}$ derived from the coagulant in the dipping step in the dip molding composition. Therefore, it is possible to reduce the content of $K^+$, $Na^+$, and $Ca^{2+}$, which will deteriorate the physical properties of the molded body later.

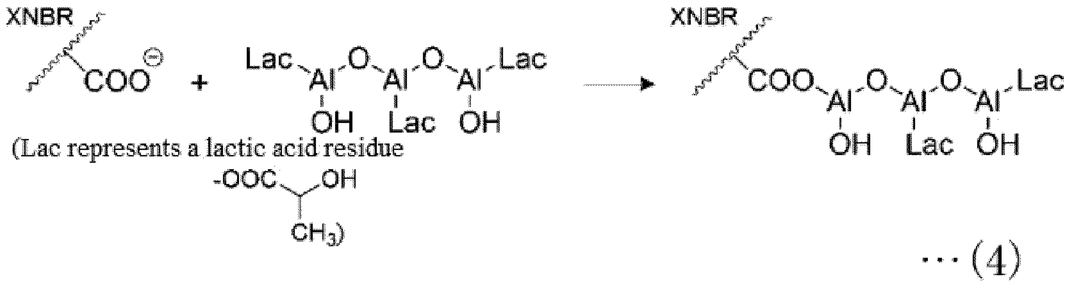


$$\cdots (4)$$

Next, after the dipping step and the gelling step, excess chemicals, impurities, and the like, which hinder subsequent curing, such as Ca, K, and a surfactant are removed from the cured film precursor with leaching water in the leaching step. In the leaching step, the cured film precursor becomes neutral from alkaline by water washing and a some carboxylates ($-COO^-$) of XNBR return to carboxyl groups (-COOH). It should be noted that Ca and K are washed

away by this water washing, but considerable amounts of Ca and K remain in the cured film precursor.

On the other hand, the polynuclear aluminum lactate compound strongly bonded to XNBR in the XNBR particles is not removed even by water washing.

Next, the curing step is a step of heating the film in the form of gloves formed by the above-mentioned steps to evaporate the water attached to the film and make the crosslinking reaction proceed. A temperature for the heating is a temperature required for the crosslinking reaction and for evaporating water (drying), and is, for example, a temperature of about 100°C to 150°C. In this curing step, the polynuclear aluminum lactate compound bonded to XNBR in the maturing step is bonded to other XNBR through a reaction represented by Formula (5) to form interparticle bonds (crosslinking).

As shown in the upper formula of Formula (5), the hydroxyl group bonded to the polynuclear aluminum lactate compound that is bonded to XNBR undergoes a dehydration-condensation reaction with the carboxyl group returned in the leaching step, thereby being bonded to XNBR to form interparticle bonds (crosslinking).

On the other hand, the carboxylic acid residue of XNBR, which remains bonded to Ca and K as a carboxylate, undergoes an exchange reaction with the remaining lactic acid residues bonded to the polynuclear aluminum lactate compound, as shown in Formula (4), thereby being bonded to XNBR to form interparticle bonds (crosslinking) (the lower formula of Formula (5)). In this manner, the polynuclear aluminum lactate compound can form stronger crosslinked bonds by simultaneously performing the dehydration-condensation reaction and the exchange reaction. Furthermore, by aluminum crosslinking with the carboxylate of XNBR, excluding K and Ca, it is possible to suppress the crosslinking by Ca and K, which deteriorates the physical properties of the finished film.

Since the lactic acid residue can undergo an exchange reaction with Ca or K bonded to the carboxylate of XNBR, the polynuclear aluminum lactate compound of the present embodiment is different from an aluminum compound having only one hydroxycarboxylic acid, such as a dihydroxyaluminum monocarboxylate (Patent Document 4), or an aluminum crosslinking agent having glyoxal, glycolic acid, sorbitol, or the like added to aluminate, such as sodium aluminate (Patent Documents 2 and 3). In the aluminum compound having only one hydroxycarboxylic acid, an aluminum ion is bonded to the carboxylate of XNBR in the dip molding composition, but since the aluminum after the bonding has two hydroxyl groups, it cannot react with alkali metal ions ($Na^+$, $K^+$, and the like) and ammonium ions ($NH_4^+$) which are counter ions of the carboxylates of XNBR in the curing step, and alkaline earth metal ions ($Ca^{2+}$). Therefore, metal ion crosslinking due to Ca, which weakens the crosslinked structure and weakens the physical properties of a molded body, cannot be suppressed.

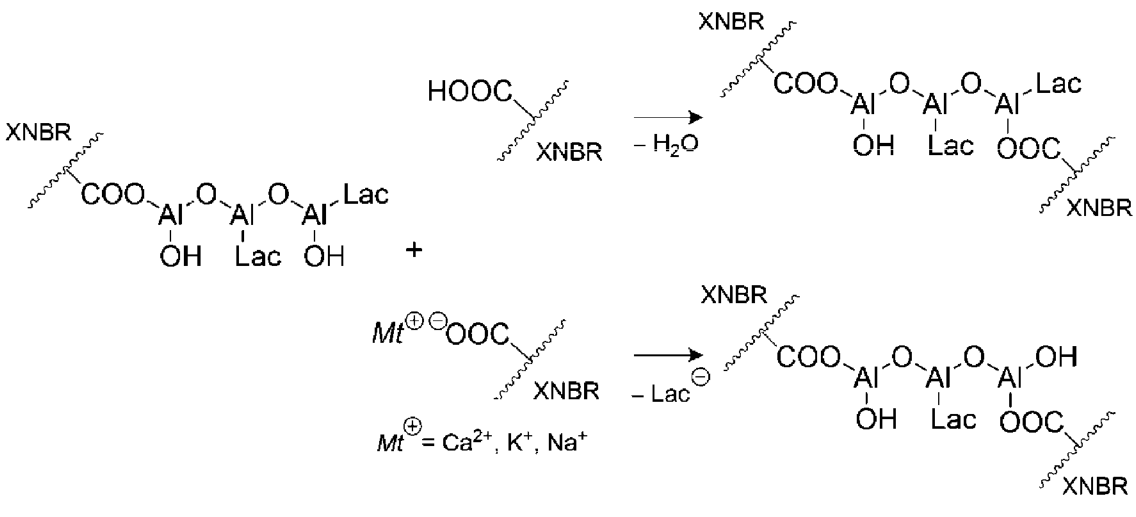


$\cdots(5)$

(In Formula (5), Lac represents a lactic acid residue as in Formula (4).)

Thirdly, the aluminum crosslinking agent for dip molding, including a polynuclear aluminum lactate compound, has a feature such that in the case where the aluminum crosslinking agent for dip molding is used for dip molding, a molded body is soft and elongates well, as compared to those in the case where other aluminum crosslinking agents are used. The reason thereof is that the polynuclear aluminum lactate compound includes two or more aluminum atoms in one molecule.

In general, the aluminum crosslinking agent has excellent tensile strength, but has drawbacks of being stiff and non-elongating as the amount is increased.

Also, for example, in the case where a crosslinking agent including two or more aluminum atoms is used, as disclosed in Patent Document 5, since the aluminum atom is bonded by $-OOC-R-COO^-$, the crosslinking agent in the technique is different from the crosslinking agent of the present embodiment. Since such a bond is easily dissociated in an alkaline dipping liquid, a crosslinked structure including two or more aluminum atoms as in the present embodiment is not formed. In this technique, the use of a polybasic hydroxycarboxylic acid (hydroxy acid having a plurality of carboxylic acids) is essential and lactic acid is not used as the hydroxy acid. Therefore, the configuration and the effects of the present embodiment could not be obtained.

In addition, for example, in the products including aluminum lactate disclosed in Patent Document 6, aluminum lactate is usually a compound containing one aluminum atom and three lactic acid residues in one molecule (a normal salt of aluminum lactate), and unlike a compound containing a plurality of aluminum atoms in one molecule and containing any of a lactic acid residue and a hydroxide ion (polynuclear aluminum lactate compound), the same configuration and effects as those in the present embodiment could not be obtained.

Since the polynuclear aluminum lactate compound of the present embodiment has a longer distance between crosslinking points than a mononuclear aluminum crosslinking agent including only one aluminum atom, the degree of freedom of the molecular structure is high and the crosslinking points are not concentrated on one aluminum. Thus, the residual strain of the obtained film is small, the modulus is difficult to increase, and the film is easy to elongate, overcoming the above-described drawbacks.

The polynuclear aluminum lactate compound may be either liquid or solid. Hereinafter, in the case where the polynuclear aluminum lactate compound is denoted as a liquid, it is cited as a "polynuclear aluminum lactate compound solution".

An example of a method for producing a polynuclear aluminum lactate compound solution includes the following steps 1 to 4.

First, in step 1, an aqueous aluminum chloride solution and an aqueous sodium aluminate solution are mixed to produce an alumina gel-containing liquid. An example of adding the aqueous aluminum chloride solution and the aqueous sodium aluminate includes starting the addition of both solutions to the reaction tank at the same time and ending the addition at the same time at ambient temperature. Examples of a device used for adding both solutions include a pump, a shower, and a nozzle spray. Both solutions added to the reaction tank are preferably mixed using a stirring device or the like. In addition, a line mixer such as a static mixer may be used for mixing both solutions. Furthermore, water may be put into a reaction tank beforehand, as needed.

It is preferable that the mixed liquid obtained by mixing the two solutions have a pH within the range of 5 to 8 from the start to the end of addition. In order to keep the pH within the above-mentioned range, the aqueous aluminum chloride solution and the aqueous sodium aluminate solution are preferably added so as to maintain a constant mixing ratio, and for example, it is preferable to use a metering pump. In addition, by setting the pH within the above-mentioned range, it is possible to produce an alumina gel that is easily desalted and washed. In the case where the pH is outside the above-mentioned range, the mixed liquid may lose fluidity.

An addition time from the start to the end of addition is not particularly limited, but is preferably 30 minutes or longer. In the case where the addition time is short, vigorous stirring and the like are required to efficiently react the aqueous aluminum chloride solution and the aqueous sodium aluminate solution. In addition, in the case where the addition time is too short, uniform reaction is inhibited by the rapid progress of the reaction due to the mixing of both solutions, whereby it may not be possible to produce a good alumina gel-containing liquid. The upper limit of the addition time is not particularly limited, but from the viewpoint of efficient production, it is preferably, for example, 8 hours. The upper limit of the addition time is more preferably 5 hours, and still more preferably 3 hours.

The amounts of the aqueous aluminum chloride solution and the aqueous sodium aluminate solution to be added are preferably determined so that the basicity of the alumina gel-containing liquid obtained by mixing the two solutions is within the range of 87% to 93%. The pH is preferably 5 to 8. Furthermore, the basicity is calculated by the following Expression 1.

$$\text{Basicity }(\%) = \{Al_2O_3(\%) \times 6/102 - \sum_{i=1}^{m}(X_i(\%) \times Y_i/Z_i) + \sum_{j=1}^{n}(x_j(\%) \times y_j/z_j)\} / (Al_2O_3(\%) \times 6/102) \times 100 \quad \cdots \text{(Expression 1)}$$

Where $X_i$ is a concentration of the i-th anion, $Y_i$ is a valence of the i-th anion, $Z_i$ is a molecular weight of the i-th anion, and the number of types i of the anion is 1 to m. In addition, $x_j$ is the concentration of the j-th cation (provided that aluminum is excluded, and the same applies below), $y_j$ is a valence of the j-th cation, $z_j$ is a molecular weight of the j-th cation, and the number of types j of the cation is 1 to n.

In step 2, the alumina gel-containing liquid obtained in step 1 is desalted and washed to obtain a washed

product containing an alumina gel. The desalting and the washing are carried out, for example, by combining filtration and water washing until the electrical conductivity (EC) of a filtrate is preferably 3.0 mS/cm or less. The lower limit of EC is not particularly limited, but in the case where it is too low, even the aluminum component may leak out. Thus, the lower limit is preferably not less than 1.0 mS/cm, for example. Therefore, the range of the EC is preferably 1.0 to 3.0 mS/cm, and more preferably 2.0 to 3.0 mS/cm.

In step 3, lactic acid is added to the washed product obtained in step 2. In the case where the number of moles of lactic acid is defined as (A) and the number of moles of Al is defined as (B) in the polynuclear aluminum lactate compound solution finally obtained, the amount of lactic acid to be added is preferably an amount so that A/B is within the range of 0.5 to 2.0. In addition, it is preferable to add an appropriate amount of water to the washed product before or after adding lactic acid to the washed product. Thus, a lactic acid-containing washed product is obtained. Furthermore, from the viewpoint of efficiently dissolving the alumina gel in the lactic acid-containing washed product, the following optional step may be performed before adding lactic acid to the washed product obtained in step 2. That is, the optional step is a step of adjusting the washed product obtained in step 2 to a pH of 5 or less using hydrochloric acid and/or nitric acid. It should be noted that the alumina gel may be completely dissolved in this optional step.

Next, in step 4, a polynuclear aluminum lactate compound solution is obtained by heating the lactic acid-containing washed product obtained in step 3 under atmospheric pressure to dissolve the alumina gel. The heating conditions may be appropriately set from the viewpoint of improving the solubility of the alumina gel, and for example, the heating temperature is 70°C to 100°C. The heating time may be appropriately set according to the heating temperature, and is, for example, 0.5 to 8 hours. Stirring may be performed during heating, as needed.

Since the polynuclear aluminum lactate compound solution obtained by the above-mentioned steps 1 to 4 is usually an acidic liquid, a pH-adjusting step may be provided as an optional step. The pH-adjusting step is preferably provided after step 3 and/or after step 4. It is preferable to adjust the pH to be within the range of 4 to 9, which may enable adjustment of the degree of polymerization of the polynuclear aluminum lactate compound solution. In addition, the adjustment to the above-mentioned pH range may cause the polynuclear aluminum lactate compound solution to be stabilized.

After step 4, the pH-adjusting step may be performed, and then a step of heating again (reheating step) may be performed, as needed. The heating conditions may be appropriately set, but for example, the heating temperature is preferably 70°C to 100°C under atmospheric pressure, as in step 4. The heating time may be appropriately set according to the heating temperature, and is, for example, 0.5 to 8 hours. In addition, stirring may be performed during heating, as needed.

In step 4 and the reheating step, in the case where the heating temperature is raised or the heating time is increased, the degree of polymerization tends to increase. The heating conditions under which the degree of polymerization exceeds 20 are, for example, a heating temperature of higher than 100°C and a heating time of 10 hours or longer, depending on the composition of an object to be heated.

In preparation of the dip molding composition, the pH of the polynuclear aluminum lactate compound solution in the case of mixing the polynuclear aluminum lactate compound solution and the XNBR latex needs to be about 7 to 9 in order to prevent a so-called "acid shock" in which the XNBR particles in the latex aggregate by an acid. Therefore, the pH may be adjusted within the range of 7 to 9 in the optional pH-adjusting step after step 3 or step 4. In the case of using an alkali for pH adjustment, preferred examples of the alkali include NaOH, KOH, and $NH_4OH$.

As necessary, the polynuclear aluminum lactate compound solution may be dried to form a solid polynuclear aluminum lactate compound. The shape is preferably a powder form. In order to avoid a change in physical properties due to drying, it is preferable to use a method such as spray drying. A solid polynuclear aluminum lactate compound can be used in the same manner as for the polynuclear aluminum lactate compound solution before drying, by dissolving the solid polynuclear aluminum lactate compound in water.

The aluminum crosslinking agent for dip molding of the present embodiment is used in an amount of 0.2 to 1.3 parts by mass, more preferably 0.3 to 1.0 parts by mass, and still more preferably 0.3 to 0.7 parts by mass in terms of aluminum oxide ($Al_2O_3$) with respect to 100 parts by mass of the copolymer elastomer, and preferably carboxy-modified acrylonitrile-butadiene rubber in the dip molding composition.

By using the aluminum crosslinking agent for dip molding of the present embodiment in the range of the above-mentioned blending amount, a molded body can be provided with remarkably good fatigue durability, sufficient tensile strength and tensile elongation, and a suitable modulus (softness). In the case where the content of the aluminum crosslinking agent for dip molding is less than the above-mentioned lower limit, the fatigue durability of the molded body may not be enhanced and an appropriate modulus may not be obtained. On the other hand, in the case where the content of the aluminum crosslinking agent for dip molding exceeds the above-mentioned upper limit, the molded body may not have sufficient tensile strength and elongation, and an appropriate modulus may not be obtained.

The addition amount in terms of aluminum oxide is calculated by Expression (1). In Expression (I), the content of aluminum is measured using an ICP emission spectrometer (ICP-AES).

Addition amount (g) in terms of aluminum oxide = Actual addition amount (g) x Aluminum content (% by mass)

x Aluminum oxide molecular weight/Aluminum atomic weight x 1/2 (I)

2. Dip Molding Composition

The dip molding composition serves as a raw material for producing a filmshaped molded body using a dipping liquid.

The dip molding composition includes at least the aluminum crosslinking agent for dip molding, a copolymer elastomer, a pH adjuster, and water, and is adjusted to a pH in the range of 8.5 to 10.5.

Examples of the copolymer elastomer include a carboxylic acid-modified elastomer. In addition, elastomers including various NBR's (nitrile-butadiene rubber) can also be used as the copolymer elastomer. In particular, carboxy-modified nitrile-butadiene rubber (XNBR) is preferably used as the carboxylic acid-modified elastomer.

The dip molding composition includes an aqueous dispersion of latex particles of the copolymer elastomer compound in water. The present embodiment includes an XNBR latex, in particular, XNBR particles having molecules of XNBR dispersed in water.

Taking the production of gloves as an example, the dip molding composition may usually include other optional components such as a dispersant, an antioxidant, and a pigment.

Each component of the dip molding composition of the present embodiment will be described below.

The copolymer elastomer used in the present embodiment is composed of copolymer particles including 20% to 35% by mass of structural units derived from (meth)acrylonitrile (acrylonitrile or methacrylonitrile), 1.5% to 6% by mass of structural units derived from ethylenically unsaturated carboxylic acid, and 59% to 78.5% by mass of structural units derived from butadiene, and water. As described above, an XNBR latex is used as the copolymer elastomer in the present embodiment.

The XNBR latex is preferably produced by emulsion polymerization. The XNBR particles included in the XNBR latex are particles formed by coating XNBR with a surfactant such as sodium dodecylbenzenesulfonate to form a copolymer.

In the case where XNBR is used in the copolymer elastomer, the basic physical properties of the XNBR latex and a molded body using the same can be changed by adjusting a compositional ratio of the structural units, a polymerization temperature during emulsion polymerization, an amount of a polymerization initiator that is a radical initiator such as ammonium persulfate, an amount of a modifier such as t-dodecyl mercaptan, a polymerization conversion rate, and the like. As an action of each structural unit in the XNBR molecule, acrylonitrile imparts strength and chemical resistance to a molded body while butadiene imparts softness as rubber. An ethylenically unsaturated carboxylic acid is used for crosslinking between particles by a polynuclear aluminum lactate compound. It should be noted that in the case where the amount of the ethylenically unsaturated carboxylic acid is too large with respect to the above-mentioned compositional ratio range, the molded body tends to be stiff and non-elongating. Each of these components can be suitably used as long as the compositional ratio of the structural units is within the above-mentioned range.

Examples of the ethylenically unsaturated carboxylic acid include acrylic acid and methacrylic acid, and the methacrylic acid can be preferably used.

By further incorporating 1% to 3% by mass of structural units of an unsaturated carboxylic acid amide such as (meth)acrylamide and N,N'-dimethylacrylamide into the XNBR latex, the molded body can be provided with physical properties such as flexibility and strength.

The XNBR latex usually has a pH of about 8.0 to 8.3, but in the dip molding composition, the overall pH is adjusted to 8.5 to 10.5. The carboxyl groups (-COOH) of XNBR are at and near the interfaces of the XNBR particles at a pH of 8.0 to 8.3. On the other hand, by further raising the pH, the carboxyl groups of the XNBR can be oriented to the outside of the particles as carboxylates ($-COO^-$). This action enables crosslinking between particles with a metal crosslinking agent such as an aluminum crosslinking agent for dip molding including the polynuclear aluminum lactate compound of the present application. In addition, in the case where the pH is higher than 10.5, there is a possibility that the polynucleation of the polynuclear aluminum lactate compound is broken, resulting in mononucleation and undesirable gelation. Furthermore, in the case where the pH is higher than 10.5, there is a possibility that the molded body is stiffer or the structure of the molded body is modified, resulting in an increase in viscosity.

For example, in mass production such as glove production, it is necessary that the dip molding composition be stabilized for about 3 to 5 days under an alkaline pH of 8.5 to 10.5. Another feature of the polynuclear aluminum lactate compound of the present embodiment is that the polynuclear aluminum lactate compound can be used after stabilization, whereas a crosslinking agent using aluminum generally tends to be gelled under alkaline conditions.

A still further feature of the polynuclear aluminum lactate compound is that the polynuclear aluminum lactate compound can be used to make a molded body, such as gloves, only by crosslinking with this compound, unlike a combined use of a metal crosslinking agent such as zinc with other crosslinking through covalent bonds in the related art. It should be noted that the crosslinking of gloves produced by dip molding using the aluminum crosslinking agent for dip molding of the present embodiment is mainly crosslinking between XNBR particles. Therefore, another organic

crosslinking agent that can be covalently bonded within the particles may also be used in combination therewith.

Examples of the pH adjuster used in the present embodiment include hydroxides of alkali metals, such as KOH and ammonium compounds such as $NH_4OH$, and KOH is preferably used.

The pH adjuster is preferably added so that the pH of the dip molding composition is adjusted to the range of 8.5 to 10.5.

Examples of other components which are optionally added to the dip molding composition include a dispersant which mainly uses an anionic surfactant such as sulfonate, an antioxidant such as a hindered phenol, and a pigment such as titanium dioxide.

3. Method for Producing Molded Body Having Crosslinking Using Aluminum Crosslinking Agent for Dip Molding

Hereinafter, a method for producing a molded body by dip molding (dipping method) using the aluminum crosslinking agent for dip molding of the present embodiment will be described in accordance with an example of a method for producing gloves. The gloves of the present embodiment are formed by molding a constituent material including the dip molding composition.

A step of producing gloves by the dipping method includes the following steps:

(1) a coagulant-attaching step (a step of attaching a coagulant to a glove mold),
(2) a maturing step (a step of preparing and stirring a dip molding composition),
(3) a dipping step (a step of immersing the glove mold in the dip molding composition),
(4) a gelling step (a step of gelling a film formed on the glove mold to make a cured film precursor),
(5) a leaching step (a step of removing impurities from the cured film precursor formed on the glove mold),
(6) a beading step (a step of making rolls around the cuffs of the gloves), and
(7) a curing step (a step of heating and drying the gloves at a temperature required for a crosslinking reaction),

in which the above-mentioned steps (3) to (7) are performed in this order.

Furthermore, the following step (6') may be optionally provided between the above-mentioned steps (6) and (7).

(6') A precuring step (a step of heating and drying the cured film precursor at a lower temperature than the curing step).

In addition, in the above-mentioned production method, a method for producing gloves by so-called double dipping, in which the above-mentioned steps (3) and (4) are repeated twice, is also included.

Furthermore, in the present specification, the cured film precursor is a film composed of an elastomer aggregated on a glove mold with a coagulant in a dipping step, is a gelled film so that calcium is dispersed in the film in the subsequent gelling step, and refers to a film that has been gelled to some extent before final curing.

Hereinafter, each step will be described in detail.

(1) Coagulant-Attaching Step

(a) The coagulant-attaching step is a step in which a mold or foamer (glove mold) is dipped in a coagulant solution including 5% to 40% by mass, and preferably 8% to 35% by mass of $Ca^{2+}$ ions as a coagulant and a gelling agent. The time for attaching the coagulant and the like onto a surface of the mold or foamer is appropriately determined, and is usually about 10 to 20 seconds. Calcium nitrate or chloride is used as the coagulant. Other inorganic salts that have an effect of precipitating elastomers may be used. Among those, calcium nitrate is preferably used. This coagulant is usually used in the form of an aqueous solution including 5% to 40% by mass of the coagulant.
In addition, the solution including the coagulant preferably includes about 0.5% to 2% by mass, for example, about 1% by mass of potassium stearate, calcium stearate, mineral oil, ester oil, or the like as a release agent.

(b) The mold or foamer having the coagulant solution attached thereto is placed in an oven with an internal temperature of about 110°C to 140°C for 1 to 3 minutes to dry and attach the coagulant to the whole or part of the surface of the glove mold. It should be noted that the surface temperature of the glove mold after drying is about 60°C, which affects subsequent reactions.

(c) Calcium not only functions as a coagulant to form a film on the surface of the glove mold, but also contributes to a substantial crosslinking function in the final finished gloves. However, with calcium alone, the bonding force is weak, and immersion in an artificial perspiration or application of a stress can easily cause cleavage.

(2) Maturing Step

(a) The maturing step is a step of preparing a dip molding composition, and the dip molding composition is subjected to homogenization and dispersion while stirring.
(b) In the actual glove-producing step, maturation usually takes one to two days since the present step is performed in a large-scale tank. This is poured into a dip tank and the dipping is continued, but as the water level in the dip tank drops, the pouring is continued. Therefore, it is necessary for the aluminum crosslinking agent for dip molding to be stable for about 3 to 5 days.
(c) The pH of the aluminum crosslinking agent for dip molding is usually about 4, but it is necessary to adjust the pH to about 7 to 9 with KOH or $NH_3$, which is a pH adjuster, in advance so as not to cause acid shock in the latex. The aluminum crosslinking agent for dip molding is stable without gelation.

(3) Dipping Step

The dipping step is a step in which the dip molding composition (dipping liquid) prepared in the maturing step is poured into a dip tank, a coagulant is attached in the dip tank in the above-mentioned coagulant-attaching step, and a mold or foamer after drying is usually immersed at a temperature of 25°C to 35°C for 1 to 60 seconds.

In this step, the calcium ions included in the coagulant aggregate the elastomer included in the dip molding composition on a surface of the mold or foamer to form a film. The polynuclear aluminum lactate compound included in the aluminum crosslinking agent for dip molding is strongly bonded to a carboxyl group of the latex.

(4) Gelling Step

The gelling step is a step for gelling the film to some extent so that the cured film precursor is not deformed during subsequent leaching. Usually, the film is heated to nearly 100°C in a gelling oven. The heating time is usually about 1 to 3 minutes. As another method for gelling, since the mold or foamer already has a certain temperature and an ambient temperature in the factory is about 30°C to 50°C, the mold or foamer may be left at this temperature for a certain period of time.

The gelling step has a purpose of dispersing calcium in the cured film precursor at the same time as gelation. The reason thereof is that calcium crosslinking accounts for a considerable number in the final gloves and forms a base for physical properties of the gloves.

(5) Leaching Step

(a) The leaching step is a step of water washing and removing excess chemicals and impurities such as calcium precipitated on the surface of the cured film precursor, which hinder subsequent curing. Usually, the mold or foamer is soaked in warm water at 30°C to 70°C for about 1 to 4 minutes.
(b) In the leaching step, the cured film precursor which has been adjusted to be alkaline is washed with water to be closer to neutral. This makes some of the carboxylates remaining in the XNBR molecules in the XNBR particles return to carboxyl groups. In the subsequent curing step, this carboxyl group forms crosslinking with a hydroxyl group of the polynuclear aluminum lactate compound bonded to another XNBR particle through a dehydration-condensation reaction.
(c) Also in this step, the polynuclear aluminum lactate compound included in the aluminum crosslinking agent for dip molding is strongly bonded to the XNBR particles and is not removed by water washing.

(6) Beading Step

In this step, an end of the cuff of the glove formed from the cured film precursor which has undergone the leaching step is rolled up to form a ring of appropriate thickness for reinforcement. In the case where this step is carried out in a wet state after the leaching step, the adhesiveness of the roll portion is good.

(6') Precuring Step

(a) This is a step in which the above-mentioned cured film precursor formed in the shape of a glove after the beading step is heated and dried at a lower temperature than the subsequent curing step. Usually, in this step, heating and drying are performed at 60°C to 90°C for about 30 seconds to 5 minutes. In the case where a high-temperature curing step is performed without performing a precuring step, the water content will evaporate rapidly, which may cause blistering protrusions on the gloves and impair the quality, but the curing step may be followed without performing the present step.

(b) The temperature may be raised to a final temperature of the curing step without performing the present step, but in the case where curing is performed in a plurality of drying furnaces and the temperature of the first stage drying furnace is slightly lowered, this first stage drying corresponds to a precuring step.

(8) Curing Step

(a) The curing step is a step of heating the above-mentioned cured film precursor formed in the shape of a glove at a high temperature to complete the crosslinking, followed by drying, to form a cured film as a glove. It is preferable that the temperature and time for the heating be appropriately selected from temperatures required for causing the crosslinking reaction and the drying. For the molded body of the present embodiment, the crosslinking and the drying can be performed, for example, by heating at 100°C to 150°C for about 15 to 30 minutes.

(b) At this curing step, the crosslinking of the gloves is finished. A hydroxyl group of the polynuclear aluminum lactate compound undergoes a dehydration-condensation reaction with a carboxyl group of the XNBR particles, and a lactic acid residue of the polynuclear aluminum lactate compound undergoes an exchange reaction with a carboxylate of the XNBR particles to form strong crosslinking. At the same time, it also suppresses K and Ca from being bonded to the carboxylate of XNBR particles, which weakens the physical properties of gloves.

Furthermore, since the aluminum in the polynuclear aluminum lactate compound is polynuclear, the crosslinking points are not concentrated at one point and form a flexible crosslinked structure where a distance between the crosslinking points is long.

(9) Double Dipping

With regard to the method for producing gloves, so-called single dipping was described in the above-mentioned description. On the other hand, the dipping step and the gelling step may be performed twice or more times, which is usually called double dipping.

The double dipping is performed for the purpose of preventing the formation of pinholes in the production of thick gloves (with a thickness of about 200 to 300 μm) and also in a method for producing thin gloves.

With regard to a precaution for the double dipping, it is preferable that a sufficient time be taken for the gelling step to sufficiently precipitate calcium onto a surface of the film in the first gelling step in order to aggregate the XNBR particles in the second dipping step.

4. Molded Body Having Crosslinking Using Aluminum Crosslinking Agent for Dip Molding

A molded body produced by the above-mentioned production method can be used in various aspects, and can be suitably used for gloves, for example. Hereinafter, gloves, in particular, XNBR gloves obtained by crosslinking of XNBR, will be described, but the present invention can also be applied to molded bodies other than the gloves.

Since a particle diameter of the XNBR particle is about one tenth of the particle diameter of natural rubber, in the case where the XNBR particles are laminated to mold a film by dip molding, theoretically, there is a possibility of bonding (crosslinking) between particles about 100 times more in one region, as compared with a case where particles of the natural rubber are laminated to mold a film. Therefore, the quality of the bonds between the XNBR particles is very important for the film properties of the XNBR gloves. The carboxylic acid contained in XNBR contributes to the interparticle bonds (crosslinking), and a metal ion bond formed by a metal ion of a divalent metal and a carboxylate ($-COO^-$) is the main component.

Therefore, in XNBR gloves in the related art, it was customary that sulfur, a vulcanization accelerator, a self-crosslinking compound, and an organic crosslinking agent be used to form covalent bonds within particles, and zinc oxide be used to form ionic bonds between particles. With regard to aluminum crosslinking, various XNBR gloves with these interparticle crosslinks have been proposed to overcome the instability of zinc oxide.

Gloves produced using a crosslinking agent including the polynuclear aluminum lactate compound of the present embodiment overcome the weaknesses of the gloves produced using other crosslinking agents including aluminum

compounds in the related art, and further improve the entire physical properties of the gloves.

Hereinafter, the physical properties of the gloves of the present embodiment using the aluminum crosslinking agent for dip molding including the polynuclear aluminum lactate compound will be described.

The tensile strength of the XNBR gloves in the related art is held by zinc crosslinking, but the gloves of the present embodiment can exhibit strength equal to or more than that of zinc with a smaller amount than zinc due to strong bonding.

In addition, in the case of comparing calcium, zinc, and aluminum that constitute the crosslinks between particles of the XNBR gloves, aluminum hardly elutes even in artificial perspiration. Based on this, the gloves of the present embodiment have a feature such that the tensile strength does not decrease much even in the case where the gloves are used by a person.

Moreover, with regard to elongation and softness of the gloves, the aluminum crosslinking in the related art has a feature such that it is stiff and non-elongating due to strong bonding, as compared to other crosslinking agents.

On the other hand, with regard to a polynuclear aluminum lactate compound, since the aluminum is polynuclear, a distance between the crosslinking points is long and the crosslinking points are not concentrated at one point. Therefore, the gloves of the present embodiment have a feature of good elongation and softness.

In addition, the fatigue durability of the gloves of the present embodiment is also better than that of gloves produced using other aluminum crosslinking agents and XNBR in the related art.

With regard to the fatigue durability, XNBR gloves made from an organic crosslinking agent which forms covalent bonds are generally good in that these gloves are hard to break, whereas XNBR gloves made from a polynuclear aluminum lactate compound are considered to have good fatigue durability in that these gloves are hard to break due to the strong bonding (crosslinking) between particles.

In addition, a stress retention rate of the gloves of the present embodiment is significantly higher than that of sulfur-vulcanized and zinc-crosslinked gloves in the related art. The reason therefor is considered to be that the rubber elasticity, which was not found in XNBR gloves in the related art, was restored by making the XNBR particles as large as natural rubber particles by tightly bonding the aluminum atoms between the XNBR particles.

In contrast, in the XNBR gloves in the related art, zinc is used for interparticle crosslinking, but the bonding force of the zinc crosslinking is relatively weak, and upon application of a tensile stress, the zinc crosslinking is broken and rebonded in the elongated state, causing a decrease in stress retention rate.

In addition, in terms of organic solvent impermeability, aluminum crosslinking as in the gloves of the present embodiment is generally superior to zinc crosslinking.

Although the physical properties of the gloves also depend on the properties of the XNBR latex, the characteristics of the physical properties caused by crosslinking with the polynuclear aluminum lactate compound have been described above.

The gloves of the present embodiment can be made without intraparticle crosslinking, but gloves with different physical properties can be made by using an intraparticle crosslinking agent in combination therewith or by changing the properties of XNBR latex.

Unlike gloves in the related art, the gloves of the present embodiment are not sulfur-vulcanized, and thus, the gloves are accelerator-free gloves and present no concerns regarding Type IV allergy.

In addition, in the gloves of the present embodiment, since aluminum is low in toxicity, it does not cause a wastewater treatment problem unlike zinc oxide, which is a heavy metal, even with discharge during a leaching step. In addition, the gloves of the present embodiment are optimum since aluminum is difficult to elute in food gloves for which the upper limit of an amount of zinc eluted is determined by the Food Sanitation Law, or gloves for a clean room in which metals such as zinc, metal salts, and anions are eluted and transferred to semiconductors.

(Other Embodiments)

In addition, in another aspect of the present embodiment, the aluminum crosslinking agent for dip molding includes a compound represented by Formula (1A).

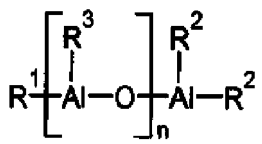

... (1A)

(In Formula (1A), $R^1$ and $R^2$ represent either a hydroxy acid residue or a hydroxyl group, and $R^3$ represents a hydroxy acid residue, a hydroxyl group, or $-O-Al-(R^3)_2$. In addition, n represents an integer of 1 to 6 and the number of Al atoms included in one molecule of the crosslinking agent is 2 to 7.)

The expression that $R^3$ "represents -O-Al-$(R^3)_2$" refers to $R^3$ being extended by a repeating structure of -O-Al- and a branched structure may further be included. In addition, n is preferably 1 to 3, and the number of aluminum atoms included in one molecule of the crosslinking agent is preferably 2 to 4. A molecular chain in the compound has a structure where aluminum atoms and oxygen atoms are alternately bonded. The compound may be linear or branched.

The hydroxy acid as used herein means a carboxylic acid having a hydroxyl group, and the hydroxy acid residue refers to a remaining portion obtained by removing one hydrogen ion from one carboxyl group of the hydroxy acid. Examples of the hydroxy acid preferably include lactic acid, glycolic acid (hydroxyacetic acid), citric acid, tartaric acid, malic acid, gluconic acid, hydroxybutyric acid, hydroxyisobutyric acid, and hydroxypropionic acid, more preferably include lactic acid glycolic acid, and citric acid, and most preferably include lactic acid. The compound has at least two hydroxy acid residues and one hydroxyl group in one molecule. It is preferable that the hydroxy acid residue be bonded to a terminal part of the molecular chain. The reason thereof is that has the effect of preventing gelation, through a hydroxide ion is added to aluminum at the terminal part of the molecular chain and the hydroxy acid bonded to the terminal part sterically protects it from being gelled, under alkali conditions in the dip molding composition.

The dip molding composition using the above-mentioned aluminum crosslinking agent for dip molding according to such another aspect of the present embodiment can be produced in the same manner as the above-mentioned production method. For example, the lactic acid in the above-mentioned production method can be appropriately changed to another hydroxy acid and used.

[Examples]

Hereinafter, the present invention will be described in more detail with reference to Examples, but the present invention is not limited to these Examples.

<Production of Polynuclear Aluminum Lactate Compound>

As a polynuclear aluminum lactate compound used in various analyses and experiments in Examples, a polynuclear aluminum lactate compound solution was produced by the following method.

(Inventive Crosslinking Agent 1)

While stirring 22 kg of water previously placed in a reaction tank at ambient temperature, 41 kg of an aqueous aluminum chloride solution having an aluminum concentration (in terms of $Al_2O_3$) of 1.0% by mass and 37 kg of an aqueous sodium aluminate solution (Na/Al (molar ratio) = 1.7) having an aluminum concentration of 1.5% by mass (in terms of $Al_2O_3$) were each added to the reaction tank using a metering pump so that the starts of addition of both solutions were made at the same time and the ends of addition were also made at the same time, thereby producing an alumina gel-containing liquid. Both the aqueous aluminum chloride solution and the aqueous sodium aluminate solution were added at a constant rate, and the time from the start to the end of addition was 45 minutes. Furthermore, the pH of the mixed liquid was maintained within the range of 5 to 8 from the start to the end of addition of both solutions. In addition, the obtained alumina gel-containing liquid had a basicity of 90.5% and a pH of 5.5 (step 1).

The alumina gel-containing liquid thus obtained was filtered, and desalted and washed with water until an electrical conductivity (EC) of the filtrate reached 2.8 mS/cm to obtain a washed product (step 2).

A lactic acid-containing washed product was obtained by adding 260 g of water and 140 g of 88% lactic acid to 600 g of the washed product (step 3).

Next, this was heated at 90°C for 3 hours under atmospheric pressure (step 4).

As described above, a polynuclear aluminum lactate compound solution having an aluminum concentration (in terms of $Al_2O_3$) of 9.0% by mass and a lactic acid concentration of 12.3% by mass was obtained. This was designated as an inventive crosslinking agent 1.

(Inventive Crosslinking Agent 2)

Steps 1 to 4 for the inventive crosslinking agent 1 were carried out in the same manner, the pH was adjusted to 5.8 by adding a 25% aqueous sodium hydroxide solution to the liquid obtained in step 4, and then the solution was heated at 100°C for 3 hours under atmospheric pressure. As a result, a polynuclear aluminum lactate compound solution having an aluminum concentration (in terms of $Al_2O_3$) of 8.6% by mass and a lactic acid concentration of 11.8% by mass was obtained. This was designated as an inventive crosslinking agent 2.

(Inventive Crosslinking Agent 3)

Steps 1 to 4 for the inventive crosslinking agent 1 were carried out in the same manner, the pH was adjusted to 6.7 by adding a 25% aqueous sodium hydroxide solution to the liquid obtained in step 4, and then the solution was heated at 100°C for 3 hours under atmospheric pressure. As a result, a polynuclear aluminum lactate compound solution having an aluminum concentration (in terms of $Al_2O_3$) of 8.5% by mass and a lactic acid concentration of 11.9% by mass was obtained. This was designated as an inventive crosslinking agent 3.

(Inventive Crosslinking Agent 4)

Steps 1 to 4 for the inventive crosslinking agent 1 were carried out in the same manner, the pH was adjusted to 8.0 by adding a 25% aqueous sodium hydroxide solution to the liquid obtained in step 4, and then the solution was heated at 100°C for 3 hours under atmospheric pressure. As a result, a polynuclear aluminum lactate compound solution having an aluminum concentration (in terms of $Al_2O_3$) of 8.8% by mass and a lactic acid concentration of 12.2% by mass was obtained. This was designated as an inventive crosslinking agent 4.

(Inventive Crosslinking Agent 5)

Steps 1 and 2 for the inventive crosslinking agent 1 were carried out in the same manner to obtain a washed product. Next, 600 g of the washed product was mixed with 168 g of water, and then 92 g of 35% hydrochloric acid was added thereto and mixed (pH 4.2). 140 g of 88% lactic acid was added to the mixture and then a 48% aqueous potassium hydroxide solution was added thereto to adjust the pH to 4.6, followed by heating at 90°C for 2 hours under atmospheric pressure. As a result, a polynuclear aluminum lactate compound solution having an aluminum concentration (in terms of $Al_2O_3$) of 8.9% by mass and a lactic acid concentration of 12.2% by mass was obtained. This was designated as an inventive crosslinking agent 5.

(Inventive Crosslinking Agent 6)

Steps 1 and 2 for the inventive crosslinking agent 1 were carried out in the same manner to obtain a washed product. Next, 600 g of the washed product was mixed with 128 g of water, and then 92 g of 35% hydrochloric acid was added thereto and mixed (pH 4.1). 180 g of 88% lactic acid was added to the mixture and then a 48% aqueous potassium hydroxide solution was added thereto to adjust the pH to 5.4, followed by heating at 90°C for 2 hours under atmospheric pressure. As a result, a polynuclear aluminum lactate compound solution having an aluminum concentration (in terms of $Al_2O_3$) of 8.9% by mass and a lactic acid concentration of 15.4% by mass was obtained. This was designated as an inventive crosslinking agent 6.

(Inventive Crosslinking Agent 7)

Steps 1 and 2 for the inventive crosslinking agent 1 were carried out in the same manner to obtain a washed product. Next, 600 g of the washed product was mixed with 18 g of water, and then 92 g of 35% hydrochloric acid was added thereto and mixed (pH 4.0). 290 g of 88% lactic acid was added to the mixture and then a 48% aqueous potassium hydroxide solution was added thereto to adjust the pH to 8.7, followed by heating at 70°C for 3 hours under atmospheric pressure. As a result, a polynuclear aluminum lactate compound solution having an aluminum concentration (in terms of $Al_2O_3$) of 6.5% by mass and a lactic acid concentration of 18.3% by mass was obtained. This was designated as an inventive crosslinking agent 7.

(Comparative Crosslinking Agent 1)

10.0 g of weighed sodium aluminate manufactured by FUJIFILM Wako Pure Chemical Industries, Ltd. was dissolved in 50.0 g of pure water. 18.2 g of a 60% aqueous sodium lactate solution manufactured by Kanto Chemical Co., Inc. was added thereto and diluted with pure water so as to have a concentration of 3.6% by mass in terms of aluminum oxide to obtain a comparative crosslinking agent 1.

(Comparative Crosslinking Agent 2)

A comparative crosslinking agent 2 was obtained in the same manner as for the comparative crosslinking agent 1, except that a mixture of 10.6 g of a 70% aqueous glycolic acid solution manufactured by Kanto Chemical Co., Inc. and 11.0 g of a 50% aqueous potassium hydroxide solution was used instead of the 60% aqueous sodium lactate solution.

(Comparative Crosslinking Agent 3)

A comparative crosslinking agent 3 was obtained in the same manner as for the comparative crosslinking agent 1, except that 35.6 g of a 50% aqueous sorbitol solution manufactured by Kanto Chemical Co., Inc. was used instead of the 60% aqueous sodium lactate solution.

(Comparative Crosslinking Agent 4)

After dissolving an aluminum lactate normal salt (aluminum trilactate) in ion exchange water, the pH was adjusted to 8 and the solution was dissolved to a concentration of 3.6% in terms of $Al_2O_3$.
All of the aluminum structures of the comparative crosslinking agents 1 to 4 are mononuclear.

(Comparative Crosslinking Agent 5)

Steps 1 to 4 for the inventive crosslinking agent 1 were carried out in the same manner, the pH was adjusted to 7.7 by adding 25% aqueous ammonia to the liquid obtained in step 4, and then the liquid was placed in a sealed container made from a Teflon (registered trademark) resin, and heated at 120°C for 12 hours under atmospheric pressure while maintaining the sealed state. As a result, a polynuclear aluminum lactate compound solution having an aluminum concentration (in terms of $Al_2O_3$) of 7.2% by mass and a lactic acid concentration of 9.8% by mass was obtained. This was designated as comparative crosslinking agent 5.
The composition and the degree of polymerization of each polynuclear aluminum lactate compound solution of the inventive crosslinking agents 1 to 7 and the comparative crosslinking agent 5 are shown in Tables 1 and 2.

[Table 1]

| Crosslinking agent | Inventive crosslinking agent 1 | Inventive crosslinking agent 2 | Inventive crosslinking agent 3 | Inventive crosslinking agent 4 |
|---|---|---|---|---|
| | Polynuclear aluminum lactate compound solution | | | |
| $Al_2O_3$ (% by mass) | 9.0 | 8.6 | 8.5 | 8.8 |
| Lactic acid (% by mass) | 12.3 | 11.8 | 11.9 | 12.2 |
| Lactic acid/Al | 0.8 | 0.8 | 0.8 | 0.8 |
| Degree of polymerization | 4.8 | 5.1 | 5.3 | 10.2 |

[Table 2]

| Crosslinking agent | Inventive crosslinking agent 5 | Inventive crosslinking agent 6 | Inventive crosslinking agent 7 | Comparative crosslinking agent 5 |
|---|---|---|---|---|
| | Polynuclear aluminum lactate compound solution | | | |
| $Al_2O_3$ (% by mass) | 8.9 | 8.9 | 6.5 | 7.2 |
| Lactic acid (% by mass) | 12.2 | 15.4 | 18.3 | 9.8 |
| Lactic acid/Al | 0.8 | 1.0 | 1.6 | 0.8 |
| Degree of polymerization | 8.9 | 7.6 | 4.2 | 23.9 |

As shown in Tables 1 and 2, it is considered that the reasons different degrees of polymerization were obtained could be mainly conditions such as the production conditions, in particular, the lactic acid/Al molar ratio, the pH adjustment of the solution obtained in step 4, and the heating after the pH adjustment. In addition, the degree of polymerization is

considered to affect the physical properties of the cured film, as shown in the experiments below.

(Preparation of Aluminum Crosslinking Agent for Dip Molding)

A 50% by mass aqueous potassium hydroxide solution was added to each polynuclear aluminum lactate compound solution produced by the above-mentioned steps to adjust the pH to 8, then ion exchange water was added thereto, and the mixture was stirred to prepare 3.5% by mass in terms of $Al_2O_3$. This was used as an aluminum crosslinking agent for dip molding.

<Investigation of Stability of Polynuclear Aluminum Lactate Compound>

(NMR Measurement)

In order to stably obtain various effects using a polynuclear aluminum lactate compound, it is necessary that the polynuclear aluminum lactate compound exist stably under an alkaline environment (pH: 8.5 to 10.5) in the dip molding composition. Therefore, the present inventors investigated the stability of polynuclear aluminum lactate compounds considered to be the most preferable in the aluminum crosslinking agent for dip molding while investigating the stability of various aluminum compounds such as an aluminum lactate normal salt and an aluminate compound, using $^{27}Al$ NMR.

In a sample, the above-described inventive crosslinking agent 1 was used as the polynuclear aluminum lactate compound. For the aluminate compound, sodium aluminate and the above-mentioned comparative crosslinking agents 1 to 3 were each used. As the aluminum lactate normal salt (aluminum trilactate), the above-mentioned comparative crosslinking agent 4 was used.

In addition, a measurement by $^{27}Al$ NMR was carried out using the following apparatus and conditions.

JNM-ECS400, nuclear magnetic resonance apparatus manufactured by JEOL Ltd.

Magnetic field strength: 9.40 T (400 MHz)
Resonant frequency: 104.17 MHz
External standard: 1 M aqueous aluminum nitrate solution

A coaxial tube manufactured by Shigemi Co., Ltd. was used and heavy water was used as a lock solvent.

The measurement was performed by a single pulse method.

As an example of an alkaline environment in the case where the polynuclear aluminum lactate compound-containing liquid for the inventive crosslinking agent 1 was used in the dip molding composition, the pH was adjusted to about 9.66. In the case where this was analyzed by $^{27}Al$ NMR, a signal near 10 ppm and a new signal near 60 ppm were observed (see FIG. 1).

Furthermore, the polynuclear aluminum lactate compound-containing liquid of the inventive crosslinking agent 1 had a pH of about 4.63 before the above-mentioned pH adjustment, and in the case where this was analyzed by $^{27}Al$ NMR, a broad signal was observed near 10 ppm (see FIG. 2).

This signal near 10 ppm accounts for about 65% of the whole, suggesting a stabilization effect of aluminum by the lactic acid residue and the presence of a polynuclear structure in the polynuclear aluminum lactate compound. Next, the pH of the aqueous solution was further increased to about 12.39 as an example under strong alkalinity. In the case where this was analyzed by $^{27}Al$ NMR, a signal was recognized near 80 ppm (see FIG. 3). Since this main signal near 80 ppm almost coincides with the chemical shift of sodium aluminate (see FIG. 7 described later), it was found that in the polynuclear aluminum lactate compound, the lactic acid residue was detached and changed to an aluminum species equivalent to the signal derived from the aluminate under such strong basicity.

Next, the aluminum lactate normal salt (comparative crosslinking agent 4) in which three lactic acid residues are bonded to an aluminum atom, which is mentioned as an example of the aluminum compound, was subjected to a $^{27}Al$ NMR measurement. A solution obtained by simply dissolving an aluminum lactate normal salt in ion exchange water had a pH of about 3.44, and in the case where this was analyzed by $^{27}Al$ NMR, a slightly broad signal was observed near 10 ppm (see FIG. 4). In the case where the pH of the aqueous solution was adjusted to an alkaline environment, for example, about 9.82, and the solution was analyzed by $^{27}Al$ NMR, a signal near 10 ppm and another new large signal near 60 ppm were observed (see FIG. 5) as in the case of the polynuclear aluminum lactate compound (FIG. 1). The signal near 10 ppm was about 10% of the whole. As compared to the polynuclear aluminum lactate compound, the abundance ratio of the signals at around 10 ppm was clearly small, suggesting an absence of a polynuclear structure in the aluminum lactate normal salt.

In the case where the pH of the aqueous solution was further increased to strongly alkaline, for example, about 13.54, and the solution was analyzed by $^{27}Al$ NMR, a signal was recognized near about 80 ppm as in the case of

polynuclear aluminum lactate (see FIG. 6). It was found that under such strong alkalinity, the lactic acid residue was detached from aluminum and changed to an aluminum species equivalent to the signal derived from aluminate.

In addition, a sodium aluminate-based crosslinking agent which is known as an aluminum crosslinking agent used for a carboxy group-containing conjugated diene-based elastomer in the related art was investigated.

An NMR chart of only the sodium aluminate compound at a pH of about 13 in heavy water ($D_2O$) is shown in FIG. 7.

In addition, the results from $^{27}Al$ NMR of a mixture of sodium aluminate and sodium lactate (stabilizer) (comparative crosslinking agent 1) and a mixture of sodium aluminate and potassium glycolate (stabilizer) (comparative crosslinking agent 2) are shown (see FIGS. 8 and 9). All of these were measured under strongly alkaline conditions (at each of pH's of 13.08 and 12.82), and in any of the cases, an aluminate signal was recognized near about 80 ppm. In the case where hydrochloric acid or an aqueous ammonium chloride solution was used in the aqueous solution to adjust the pH to an alkaline environment of the dip molding composition, gelation occurred from a pH near 11, making the measurement by $^{27}Al$ NMR impossible.

As seen in the examples of the aluminum lactate normal salt and the polynuclear aluminum lactate, it is considered that the stabilization effect was not sufficiently obtained since an interaction between the lactic acid residue and aluminum could not be obtained in strong alkalinity.

Thus, it was found that in the case of using sodium aluminate and sodium lactate or potassium glycolate as a stabilizer, the effect of the stabilizer in an alkaline environment in the dip molding composition is low, and sufficient stability cannot be obtained.

In addition, the results of $^{27}Al$ NMR of a mixture of sodium aluminate and sorbitol (stabilizer) (comparative crosslinking agent 3) adjusted to a pH of 12.46 are shown (see FIG. 10). An aluminate signal was recognized near about 80 ppm, and at the same time, a small broad signal was recognized near about 50 ppm.

Moreover, the pH of the aqueous solution was adjusted to 9.98 using an aqueous ammonium chloride solution, and the results of the measurement by $^{27}Al$ NMR are shown (see FIG. 11). The aluminate signal near about 80 ppm became smaller, while a large broad signal was recognized near about 10 ppm in addition to the broad signal near about 50 ppm seen at a pH of 12.46. It is presumed that the signal represents a form of aluminum in which sodium aluminate and sorbitol have interacted in some manner. In the comparative crosslinking agent 3, it is considered that sorbitol as a stabilizer exhibits a certain effect in an alkaline environment in the dip molding composition and a predetermined stability is exhibited.

As described above, it was recognized that the polynuclear aluminum lactate compound of the present Example has a polynuclear structure under an alkaline environment (pH: 8.5 to 10.5) in the dip molding composition, and is stabilized by the lactic acid residue. In addition, it is presumed that sodium aluminate-based crosslinking agents known as an aluminum crosslinking agent for use in a carboxy group-containing conjugated diene-based elastomer cannot provide sufficient stability at a pH of 8.5 to 10.5 even with a use of a stabilizer. However, it was recognized that there is a possibility of obtaining better stability by choosing a stabilizer.

(Mass Spectrometry)

The polynuclear aluminum lactate compound prepared according to the above-mentioned step of producing the inventive crosslinking agent 1 and a commercially available aluminum lactate normal salt were qualitatively analyzed by mass spectrometry. The mass spectrometry was performed by measurement under the following conditions.

A solution obtained by diluting 9% by mass of a polynuclear aluminum lactate compound in terms of $Al_2O_3$ (the above-mentioned inventive crosslinking agent 1) with pure water to 20 times, and an aqueous solution obtained by dissolving 10 mg of an aluminum lactate normal salt in 2 mL of pure water were each measured by MS with the following specifications.

MS: Q Exactive Plus manufactured by Thermo Fisher Scientific
Ionization: Nano-ESI (electrospray ionization) method
Ion source: Use of TriVersa NanoMate
MS detection: Full scan (positive ion m/z 80 to 1,200)
Gas pressure: $N_2$ 0.3 psi
Voltage at the time of spraying: 1.8 kV

ESI-MS and detection peak comparison of the polynuclear aluminum lactate compound and the aluminum lactate normal salt are shown (FIG. 12).

As confirmed by $^{27}Al$ NMR, it is assumed that the polynuclear aluminum lactate compound has a polynuclear structure. Looking at the MS of the polynuclear aluminum lactate compound, m/z 505.0505 and 559.0612 were detected. Since these are assigned to trinuclear aluminum complexes, it was suggested that the compound has a polynuclear structure. Furthermore, it was suggested that the compound has $-(Al-O)_n-$ as a partial skeleton thereof. In addition, since

these signals were not observed for the aluminum lactate normal salt, it was shown that the polynuclear aluminum lactate compound and the aluminum lactate normal salt have distinctly different structures.

In addition, other results of the mass spectrometry performed in the same manner on the inventive crosslinking agent 1 are shown FIG. 13.

Next, the degrees of polymerization were calculated for the aluminum crosslinking agent for dip molding using the polynuclear aluminum lactate compound, and other aluminum crosslinking agents. The calculation method is shown below.

The osmotic pressure is known to be proportional to the concentration of all solutes, and the concentration ($C_{CL}$) of the aluminum crosslinking agent to be determined was calculated by subtracting a concentration ($C_{other}$) of substances other than a substance including Al to be measured from a concentration ($C_{total}$) determined from the osmotic pressure.

$$C_{CL} = C_{total} - C_{other}$$

In addition, the degree n of polymerization of the aluminum crosslinking agent can be calculated by comparing the crosslinking agent concentration ($C_{CL}$) with the total Al atom concentration ($C_{Al}$) included in the solution.

$$n = C_{Al}/(C_{CL})$$

$C_{total}$, $C_{Al}$, and $C_{other}$ in the expression were each calculated by the osmotic pressure, ICP/AES, ion chromatography, and NMR. The measurement conditions are shown below.

The polynuclear aluminum lactate compound and the aluminum lactate normal salt were each adjusted to an aqueous solution at about 100 mM in terms of $Al_2O_3$, and measured with an osmometer OSMOMAT 3000 (D) manufactured by GOMOTEC.

The obtained measurement results were in a unit of a total particle concentration Osmol/kg, which is equivalent to mol/kg, and since the solution was a dilute solution in this measurement, the unit was treated as equivalent to mol/L.

Various ion concentrations were measured by diluting a sample used for measuring the osmotic pressure to an appropriate concentration. The ion concentration is usually obtained in a unit of mg/L, but was calculated in a unit of mmol/L by dividing by a formula weight of each ion.

The ion species measured are as follows.

Cation ($Na^+$, $K^+$, $Ca^{2+}$, $NH^{4+}$)
Anions ($Cl^-$, $NO_3^-$, $SO_4^{2-}$)
Measuring device: 881 Compact IC pro manufactured by Metrohm
Anion column: Metrosep A Supp 5-150
Guard column: Metrosep A Supp 4/5 S-Gusrd
Cation column: Metrosep C 4-150
Guard column Metrosep C 4 S-Gusrd

The Al atom concentration was measured by ICP/AES for the sample used for measuring the osmotic pressure. The element concentration was calculated in a unit of mmol/L.
Measuring device: ICPS-8000 manufactured by Shimadzu Corporation

$^1H$ and $^{13}C$ NMR were measured for the prepared crosslinking agent sample under the following conditions and a concentration of dissociated lactic acid was calculated.

Apparatus: Bruker AVANCE NEO
Magnetic field strength: 700 MHz

A coaxial tube manufactured by Shigemi Co., Ltd. was used and heavy water was used as a lock solvent.

The measurement results of the degree of polymerization of the inventive crosslinking agent 1 and the comparative crosslinking agents 1 to 4 are shown below.

[Table 3]

| Crosslinking agent | Inventive crosslinking agent 1 | Comparative crosslinking agent 1 | Comparative crosslinking agent 2 | Comparative crosslinking agent 3 | Comparative crosslinking agent 4 |
|---|---|---|---|---|---|
| | Polynuclear aluminum lactate compound | $NaAlO_2$ + Stabilizer | | | Aluminum lactate normal salt |
| Stabilizer | - | Na lactate | K glycolate | Sorbitol | - |
| $Al_2O_3$ (% by mass) | 9.0 | 3.6 | 3.6 | 3.6 | 1.0 |
| Stabilizer/Al | 0.8 | 0.8 | 0.8 | 0.8 | 3.0 |
| Degree of polymerization | 4.8 | 0.6 | 0.6 | 1.5 | 0.6 |

The inventive crosslinking agent 1 exhibited a degree of polymerization of 4.8, whereas the degrees of polymerization of the comparative crosslinking agents 1 to 3 in which a stabilizer was added to aluminic acid and the comparative crosslinking agent 4 which was commercially available aluminum lactate were shown to be 0.6 to 1.5, which are values close to 1. Based on this, it is considered that the inventive crosslinking agent 1 is polynuclear (an oligomer), unlike the aluminum-based crosslinking agents that have been used so far.

<Carboxy-Modified Acrylonitrile-Butadiene Rubber>

The following carboxy-modified acrylonitrile-butadiene rubber was prepared and used in Examples and Comparative Examples.

(a) Carboxy-modified acrylonitrile-butadiene rubber (XNBR) latex: Kumho 830 (trademark, manufactured by Kumho Petrochemical Co., Ltd., solid content: 45% by mass, methacrylic acid blending ratio: about 1.8% by mass, acrylonitrile blending ratio: about 26.9% by mass)
(b) Carboxy-modified acrylonitrile-butadiene rubber (XNBR) latex: NL125 (trademark, manufactured by LG Chemical Co., Ltd., solid content: 45% by mass, methacrylic acid blending ratio: about 1.8% by mass, acrylonitrile blending ratio: about 29.2% by mass)

<Preparation of Coagulation Liquid and Attachment of Coagulant to Ceramic Plate>

A coagulation liquid used for molding a film was prepared as follows. 12.5 g of a release agent (CTF 3B-G2 manufactured by BIO COSMIC SPECIALITY CHEMICALS, concentration of solid contents 40% by mass) was diluted with 80.1 g of pre-weighed water and stirred for 3 to 4 hours to produce a release agent dispersion liquid. Separately, a beaker in which 143.9 g of calcium nitrate tetrahydrate had been dissolved in 153.0 g of water was prepared, and the release agent dispersion liquid previously prepared was added to the aqueous calcium nitrate solution under stirring. Next, this was adjusted to a pH of about 9.0 with 5% aqueous ammonia, and water was added thereto so that the final concentration of solid contents of calcium nitrate as an anhydride was 20% by mass and the concentration of solid contents of the release agent was 1.2% by mass, thereby obtaining 500 g of a coagulation liquid.

The obtained coagulation liquid was heated to about 50°C under stirring, filtered through a 200-mesh nylon filter, and placed in an immersion vessel. A ceramic plate (200 mm long × 80 mm wide × 3 mm thick) that had been washed and then heated to 60°C was inserted vertically so that a tip touched a liquid surface of the coagulation liquid, then inserted to a position 180 mm from the tip of the ceramic plate over 4 seconds, held in that state for 4 seconds, and removed over 3 seconds. The coagulation liquid attached to the surface of the ceramic plate was quickly shaken off, and the surface of the ceramic plate was dried. The dried ceramic plate was heated to 60°C and stored.

<Production Example 1: Production of Molded Bodies of Experiment Nos. 1 to 11>

(Experiment Nos. 1 to 7)

Kumho 830 latex manufactured by Kumho Petrochemical Co., Ltd. was used as an XNBR latex. 100 g of ion exchange water was added to 220 g of the XNBR latex to perform dilution, stirring was started, and the pH of the latex was adjusted to about 9.2 using a 5% by mass aqueous potassium hydroxide solution. Next, the polynuclear aluminum lactate compound solution for the inventive crosslinking agent 1 in the amount of 0 to 1.5 parts by mass with respect to 100 parts by mass of the XNBR latex was added to the latex, and an antioxidant (CVOX-50 (trademark) manufactured by Farben Technique (M) Sdn Bhd, solid content 53%) in the amount of 0.2 parts by mass with respect to 100 parts by mass of the XNBR latex was added thereto. Next, after mixing for about 16 hours, the pH was adjusted to 10.0 using a 5% by mass aqueous potassium hydroxide solution to obtain a dip molding composition.

Then, the dip molding composition was filtered through a 200 mesh nylon filter at ambient temperature and then placed in an immersion vessel. Next, the above-mentioned entire ceramic plate heated to 60°C was inserted into the dip molding composition over 6 seconds, held as it was for 4 seconds, and then removed over 3 seconds. Then, the dip molding composition was held in the air until it stopped dripping, and the droplets attached to the tip were lightly shaken off. The cured film precursor formed on the ceramic plate was dried at 50°C for 2 minutes and then washed with warm water at 50°C for 2 minutes. Thereafter, the cured film precursor thus gelled was dried at 70°C for 5 minutes and then cured at 130°C for 30 minutes. The cured film obtained by peeling cleanly from the ceramic plate was stored in an environment of a temperature of 23°C ± 2°C and a humidity of 50% ± 10%, and subjected to each physical property test.

(Experiment Nos. 8 to 10)

A cured film was obtained in the same manner as in Experiment Nos. 1 to 7, except that NL125 (trademark) manufactured by LG Chemical Co., Ltd. was used as the XNBR and the addition amount of the polynuclear aluminum lactate compound solution of the inventive crosslinking agent 1 was set to 0 to 0.5 parts by mass with respect to 100 parts by mass of the XNBR.

(Experiment No. 11)

A cured film was obtained in the same manner as in Experiment No. 10, except that the polynuclear aluminum lactate compound solution of the inventive crosslinking agent 1 was changed to 0.5 parts by mass of zinc oxide.

<Method for Evaluating Physical Properties of Cured Film>

The physical property tests used to evaluate the cured film are as follows.

(Tensile Strength, Tensile Elongation, and Modulus)

The tensile strength, the tensile elongation, and the modulus were measured in accordance with ASTM D412. As a test piece, a cured film obtained from each dip molding composition was used after punching out using DieC manufactured by Dumbbell Co., Ltd. The test piece was measured at a test speed of 500 mm/min, a chuck-to-chuck distance of 75 mm, and a gauge-to-gauge distance of 25 mm, using an STA-1225 Universal Testing Machine (trademark) manufactured by A&D.

(Fatigue Durability)

As a test piece, a JIS K6251 No. 1 dumbbell piece (120 mm in length) cut from the cured film obtained from each dip molding composition was used. In addition, as an artificial perspiration, one prepared by adding 20 g of sodium chloride, 17.5 g of ammonium chloride, 17.05 g of lactic acid, and 5.01 g of acetic acid to 1 liter of deionized water, and adjusting the pH to 4.7 with an aqueous sodium hydroxide solution was used.

The above-mentioned dumbbell test piece (120 mm in length) was sandwiched between a fixed chuck and a movable chuck at 15 mm from both terminal parts, and the test piece on the fixed chuck side was immersed in the artificial perspiration up to 60 mm from the bottom. The movable chuck was then moved to the minimum position (relaxed state) where the length of the test piece was 147 mm (123%). A cycle test was carried out as follows: after holding the test piece in this state for 11 seconds, an operation of moving the movable chuck to the maximum position (extended state) where the length of the test piece was 195 mm (163%) and then again to the minimum position (relaxed state) was performed for 1.8 seconds, and the operation from holding the test piece at the minimum position to returning to

the minimum position through the maximum position for 12.8 seconds in total was performed as one cycle. The fatigue durability was evaluated from a time (minutes) determined by multiplying 12.8 seconds as a one cycle time by the number of cycles taken until the test piece fractured.

(Stress Retention Rate)

The stress retention rate was measured as follows.

A test piece was manufactured from a cured film using a DieC manufactured by Dumbbell Co., Ltd. in accordance with ASTM D412, and marked with a gauge-to-gauge distance of 25 mm. The test piece was attached to a tensile tester with a chuck-to-chuck distance of 90 mm and pulled at a tensile speed of 500 mm/min, and in the case where the gauge-to-gauge distance was doubled, the pulling of the test piece was stopped and a stress M0 at 100% elongation was measured. A change in stress was measured while holding the test piece from the point of time when the pulling of the test piece had been stopped, and a stress M6 was measured after 6 minutes had passed. Then, the stress retention rate was calculated by (M6/M0) $\times$ 100 (%). A state where the higher the stress retention rate, the more stress is maintained after stretching is shown, and shows the higher elastic deformation force to return to the original shape at the time of removal of the external force. Thus, the fit of the gloves and the tightness of the bottom part are improved, and wrinkles are reduced.

For sulfur-crosslinked XNBR gloves in the related art, the stress retention rate measured by the above-mentioned method is in 30s%. Thus, in the case where the molded body of the present embodiment has a stress retention rate of 40% or more, it is as good as the XNBR gloves.

<Evaluation of Physical Properties of Cured Film of Production Example 1>

The results of each physical property test of the cured film of Production Example 1 are shown in Table 4 below.

[Table 4]

| Experiment No. | | 1 | 2 | 3 | 4 | 5 | 6 | 7 | 8 | 9 | 10 | 11 |
|---|---|---|---|---|---|---|---|---|---|---|---|---|
| | | Comparative Example | Example | Example | Example | Example | Example | Example | Comparative Example | Example | Example | Comparative Example |
| Type of latex | | 830 | 830 | 830 | 830 | 830 | 830 | 830 | NL125 | NL125 | NL125 | NL125 |
| Addition amount of Al crosslinking agent | | - | 0.1 | 0.3 | 0.5 | 0.7 | 1.0 | 1.5 | - | 0.3 | 0.5 | - |
| Addition amount of Zn crosslinking agent | | - | - | - | - | - | - | - | - | - | - | 0.5 |
| Film thickness (μm) | | 75 | 82 | 79 | 81 | 79 | 82 | 84 | 69 | 73 | 73 | 70 |
| Tensile strength (MPa) | | 42.3 | 42.9 | 41.9 | 42.7 | 42.7 | 37.3 | 27.4 | 35.7 | 44.8 | 42.5 | 33.9 |
| Tensile elongation (%) | | 692 | 673 | 687 | 668 | 665 | 639 | 540 | 649 | 634 | 625 | 595 |
| Modulus (MPa) | 100% | 2.23 | 2.35 | 2.32 | 2.54 | 2.67 | 2.96 | 3.88 | 2.34 | 2.52 | 2.55 | 2.77 |
| | 300% | 4.44 | 4.97 | 5.04 | 6.09 | 6.73 | 7.94 | 10.75 | 4.70 | 6.57 | 7.05 | 6.52 |
| | 500% | 11.1 | 13.3 | 13.1 | 16.5 | 18.1 | 20.0 | 23.7 | 12.3 | 18.5 | 20.0 | 17.4 |
| Fatigue durability (min) | | 9 | 37 | 193 | 336 | 383 | 322 | 85 | 14 | 136 | 225 | 28 |
| Stress retention rate (%) | | 43.2 | 42.3 | 45.2 | 49.2 | 50.3 | 52.9 | 54.3 | 42.2 | 44.8 | 46.0 | 40.7 |

First, in Experiment Nos. 1 and 8, the physical properties of the cured film were observed in the case where no crosslinking agent was added. These are the physical properties in the case of calcium crosslinking derived from a coagulant, and from these results, the essential physical properties of each XNBR latex are revealed. Among these, it was found that the calcium crosslinking does not exhibit fatigue durability at all.

Experiment No. 11 is an example in which zinc oxide was added, but it can be seen that the fatigue durability and the stress retention rate were deteriorated, as compared to all Production Examples in which a polynuclear aluminum lactate compound was used as a crosslinking agent. In particular, the stress retention rate was deteriorated, as compared with that in Experiment No. 8 in which no crosslinking agent was added.

In fact, since 0.8 to 1.2 parts by mass of zinc oxide has usually been added to gloves in the related art, it was shown that zinc oxide further reduces the stress retention rate.

Next, from Experiment Nos. 2 to 7, a change in the physical properties of the cured film due to a change in the amount of the polynuclear aluminum lactate compound can be seen. The tensile strength was generally good, and in the case where the content of the polynuclear aluminum lactate compound was more than 0.1% by mass and less than 1.5% by mass, particularly good strength was obtained. With regard to the tensile elongation and the modulus (softness), it was shown that as the amount of the polynuclear aluminum lactate compound was further increased, the elongation was gradually decreased and the stiffness was increased.

Furthermore, with regard to the fatigue durability, in the case where the amount of the polynuclear aluminum lactate compound added was 0.1 parts by mass and 1.5 parts by mass, the fatigue durability was poor, and in the case where the amount was each 0.3, 0.5, 0.7, and 1.0 parts by mass, good fatigue durability was exhibited. Taking these into account, it was confirmed that in the case where the amount of the aluminum crosslinking agent for dip molding is in the range of 0.2 parts by mass to 1.3 parts by mass, in terms of aluminum oxide included, with respect to 100 parts by mass of the copolymer elastomer, the cured film has good physical properties and a molded body that is suitable for gloves is obtained.

<Production Example 2: Production of Molded Bodies of Experiment Nos. 12 to 36>

(Experiment Nos. 12 to 16)

A cured film was obtained in the same manner as in the above-mentioned Experiment No. 4, except that the dip molding composition obtained by pH adjustment was stored with stirring under environmental conditions for each of 1 day, 2 days, 3 days, 4 days, and 5 days.

(Experiment Nos. 17 to 21)

Sodium aluminate was used as the comparative crosslinking agent and sodium lactate was used as the stabilizer (comparative crosslinking agent 1). A cured film was obtained in the same manner as in Experiment No. 4, except that with regard to other conditions, the dip molding composition obtained by adjusting the pH was stored with stirring under environmental conditions for each of 1 day, 2 days, 3 days, 4 days, and 5 days.

(Experiment Nos. 22 to 26)

A cured film was obtained in the same manner as in Experiment Nos. 17 to 21, except that sodium aluminate was used as the comparative crosslinking agent and potassium glycolate was used as the stabilizer (comparative crosslinking agent 2).

(Experiment Nos. 27 to 31)

A cured film was obtained in the same manner as in Experiment Nos. 17 to 21, except that sodium aluminate was used as the comparative crosslinking agent and sorbitol was used as the stabilizer (comparative crosslinking agent 3).

(Experiment Nos. 32 to 36)

A cured film was obtained in the same manner as in Experiment Nos. 17 to 21, except that an aluminum lactate normal salt was used as the comparative crosslinking agent (comparative crosslinking agent 4).

<Evaluation of Production Example 2>

The results of each physical property test of the cured films of Experiment Nos. 12 to 36 are shown in Tables

5 and 6 below.

[Table 5]

| Experiment No. | | 12 | 13 | 14 | 15 | 16 | 17 | 18 | 19 | 20 | 21 |
|---|---|---|---|---|---|---|---|---|---|---|---|
| | | Inventive crosslinking agent 1 | | | | | Comparative crosslinking agent 1 | | | | |
| Crosslinking agent | | Polynuclear aluminum lactate | | | | | $NaAlO_2$ + Na lactate | | | | |
| Maturation time (days) | | 1 | 2 | 3 | 4 | 5 | 1 | 2 | 3 | 4 | 5 |
| Film thickness (μm) | | 79 | 77 | 75 | 79 | 77 | 76 | 78 | 77 | 79 | 76 |
| Tensile strength (MPa) | | 44.4 | 44.4 | 43.7 | 43.1 | 38.7 | 41.2 | 39.6 | 35.1 | 33.6 | 34.9 |
| Tensile elongation (%) | | 661 | 648 | 684 | 674 | 629 | 575 | 583 | 605.33 | 588.67 | 570.67 |
| Modulus (MPa) | 100% | 2.55 | 2.71 | 2.21 | 2.28 | 2.70 | 3.58 | 3.39 | 2.99 | 3.03 | 3.68 |
| | 300% | 6.64 | 7.30 | 5.97 | 6.23 | 6.83 | 11.01 | 10.39 | 9.19 | 9.41 | 10.45 |
| | 500% | 18.6 | 20.7 | 15.9 | 16.8 | 19.0 | 30.24 | 28.01 | 22.93 | 23.27 | 26.01 |
| Fatigue durability (min) | | 304 | 225 | 172 | 295 | 242 | 103 | 67 | 42 | 66 | 39 |
| Stress retention rate (%) | | 44.1 | 45.2 | 48.8 | 49.1 | 50.1 | 50.2 | 47.8 | 53.1 | 52.8 | 53.0 |

[Table 6]

| Experiment No. | | 22 | 23 | 24 | 25 | 26 | 27 | 28 | 29 | 30 | 31 | 32 | 33 | 34 | 35 | 36 |
|---|---|---|---|---|---|---|---|---|---|---|---|---|---|---|---|---|
| | | Comparative crosslinking agent 2 | | | | | Comparative crosslinking agent 3 | | | | | Comparative crosslinking agent 4 | | | | |
| Crosslinking agent | | $NaAlO_2$ + K glycolate | | | | | $NaAlO_2$ + Sorbitol | | | | | Aluminum lactate normal salt | | | | |
| Maturation time (days) | | 1 | 2 | 3 | 4 | 5 | 1 | 2 | 3 | 4 | 5 | 1 | 2 | 3 | 4 | 5 |
| Film thickness (μm) | | 81 | 79 | 78 | 80 | 77 | 79 | 79 | 78 | 76 | 77 | 76 | 75 | 72 | 76 | |
| Tensile strength (MPa) | | 40.1 | 36.6 | 33.8 | 33.6 | 32.0 | 39.8 | 37.3 | 32.6 | 32.5 | 29.5 | 41.0 | 41.1 | 40.4 | 38.0 | |
| Tensile elongation (%) | | 582 | 577 | 605 | 604 | 565 | 579 | 562 | 603 | 587 | 560 | 616 | 618 | 611 | 612 | |
| Modulus (MPa) | 100% | 3.40 | 3.29 | 2.87 | 2.94 | 3.50 | 3.33 | 3.42 | 2.73 | 2.86 | 3.22 | 2.83 | 2.94 | 3.17 | 3.02 | |
| | 300% | 10.6 | 10.1 | 9.04 | 9.10 | 9.98 | 10.4 | 10.6 | 8.72 | 9.19 | 9.38 | 8.03 | 8.34 | 8.98 | 8.59 | |
| | 500% | 28.8 | 26.5 | 22.1 | 22.1 | 24.4 | 28.6 | 28.7 | 21.5 | 22.7 | 22.8 | 23.4 | 23.7 | 24.0 | 23.3 | |
| Fatigue durability (min) | | 111 | 67 | 57 | 68 | 44 | 287 | 175 | 109 | 138 | 109 | 117 | 110 | 82 | 76 | |
| Stress retention rate (%) | | 49.1 | 50.1 | 52.2 | 53.5 | 54.2 | 49.1 | 47.6 | 56.2 | 55.9 | 54.7 | 45.1 | 43.9 | 47.3 | 47.3 | |

In Production Example 2, the physical properties of a cured film manufactured using a polynuclear aluminum lactate compound as an aluminum crosslinking agent for dip molding were compared with the physical properties of a cured film manufactured by adding various stabilizers to sodium aluminate as a starting material. For the comparison, the crosslinking agent is required to have a usable life (so-called pot life) of at least 3 to 5 days, and thus, the physical properties were also confirmed for the effects of setting the maturation time to 1 to 5 days.

From these results, it can be seen that the cured films (Experiment Nos. 12 to 16) manufactured using the polynuclear aluminum lactate compound as the aluminum crosslinking agent for dip molding have better tensile strength, elongation, softness (modulus), and fatigue durability than those of the cured films (Experiment Nos. 17 to 35) manufactured using other sodium aluminate-starting crosslinking agents.

It should be noted that the stress retention rates in Experiment Nos. 12 to 16 are equal to or slightly inferior to those in Experiment Nos. 17 to 35, but are at much higher levels than those of the XNBR gloves in the related art. In addition, it can be seen that in Experiment Nos. 12 to 16, the tensile elongation and the modulus (softness) are good.

Furthermore, with regard to the fatigue durability, only Experiment Nos. 12 to 16 showed practical feasibility.

Among the comparative crosslinking agents, only in the case where the aluminum lactate normal salt was used (Experiment Nos. 32 to 35) was the change in the physical properties of the cured film small between 1 and 4 days, and the same stability as in the case where the polynuclear aluminum lactate was used (Experiment Nos. 12 to 16) was shown. This is considered to be the result of showing the stability of aluminum lactate in the solution, which is in contrast to the unstable dip compositions obtained in Experiment Nos. 17 to 21 in which sodium lactate was added to sodium aluminate. This refers to the aluminum lactate normal salt and sodium lactate added to sodium aluminate having distinctly different properties. However, in the case where the aluminum lactate normal salt was used as the crosslinking agent (Experiment Nos. 32 to 35), the fatigue durability was low, there were many problems such as generation of aggregates in the preparation of the dip composition, and dipping was difficult with a maturation time of 5 days. It can be said that as the crosslinking agent, ordinary aluminum lactate normal salts are not suitable but polynuclear aluminum lactate compounds are suitable.

<Production Example 3: Production of Molded Bodies of Experiment Nos. 37 to 41>

A cured film was obtained in the same manner as in Experiment No. 10 of Production Example 1, except that the crosslinking agents used were the inventive crosslinking agents 1 to 4 and the comparative crosslinking agent 5.

<Evaluation of Production Example 3>

The results of each physical property test of the cured films of Experiment Nos. 37 to 41 are shown in Table 7 below.

[Table 7]

| Experiment No. | | 37 | 38 | 39 | 40 | 41 |
|---|---|---|---|---|---|---|
| | | Example | Example | Example | Example | Comparative Example |
| Crosslinking agent | | Inventive crosslinking agent 1 | Inventive crosslinking agent 2 | Inventive crosslinking agent 3 | Inventive crosslinking agent 4 | Comparative crosslinking agent 5 |
| Degree of polymerization | | 4.8 | 5.1 | 5.3 | 10.2 | 23.9 |
| Latex | | NL125 | NL125 | NL125 | NL125 | NL125 |
| Film thickness (μm) | | 71 | 73 | 73 | 72 | 70 |
| Tensile strength (MPa) | | 45.2 | 42.7 | 46.3 | 46.4 | 43.4 |
| Tensile elongation (%) | | 599 | 599 | 621 | 621 | 629 |
| Modulus (MPa) | 100% | 3.26 | 2.98 | 2.88 | 2.91 | 2.72 |
| | 300% | 9.01 | 7.60 | 7.24 | 7.31 | 6.09 |
| | 500% | 28.1 | 23.4 | 22.6 | 23.3 | 17.6 |

(continued)

| Experiment No. | 37 | 38 | 39 | 40 | 41 |
|---|---|---|---|---|---|
| | Example | Example | Example | Example | Comparative Example |
| Fatigue durability (min) | 204 | 158 | 83 | 128 | 41 |
| Stress retention rate (%) | 43.8 | 42.5 | 41.6 | 41.4 | 43 |

As the polymerization degree of the polynuclear aluminum lactate compound increased, the tensile strength did not change significantly, but the tensile elongation increased and the modulus decreased, making it possible to make a cured film with good elongation and softness. On the other hand, in the case where the degree of polymerization of the polynuclear aluminum lactate compound was too high as in Experiment No. 41, the fatigue durability tended to decrease. From these results, it is considered that the polynuclear aluminum lactate compound included in the aluminum crosslinking agent for dip molding preferably has a polymerization degree in the range of 2 to 20.

<Production Example 4: Production of Molded Bodies of Experiment Nos. 42 to 44>

A cured film was obtained in the same manner as in Experiment No. 10 of Production Example 1, except that the crosslinking agents used were the inventive crosslinking agents 5 and 6.

<Evaluation of Production Example 4>

The results of each physical property test of the cured films of Experiment Nos. 42 to 44 are shown in Table 8 below.

[Table 8]

| Experiment No. | | 42 | 43 | 44 |
|---|---|---|---|---|
| | | Example | Example | Example |
| Crosslinking agent | | Crosslinking agent 5 | Crosslinking agent 6 | Crosslinking agent 7 |
| Lactic acid/Al | | 0.8 | 1 | 1.6 |
| Degree of polymerization | | 8.9 | 7.6 | 4.2 |
| Latex | | 830 | 830 | 830 |
| Film thickness (μm) | | 76 | 74 | 80 |
| Tensile strength (MPa) | | 39.0 | 39.0 | 43.9 |
| Tensile elongation (%) | | 618 | 604 | 624 |
| Modulus (MPa) | 100% | 2.56 | 2.84 | 3.04 |
| | 300% | 6.78 | 7.62 | 8.20 |
| | 500% | 19.5 | 21.7 | 23.5 |
| Fatigue durability (min) | | >240 | >240 | >240 |
| Stress retention rate (%) | | 45.1 | 45.9 | 47 |

In the case where the lactic acid/Al of the polynuclear aluminum lactate compound was increased, the tensile strength and the modulus tended to increase. All of the cured films of Experiment Nos. 42 to 44 had sufficiently high fatigue durability and sufficient performance as gloves. The reason for this is considered to be that the degree of polymerization of aluminum included in one molecule of the aluminum compound was decreased by increasing the lactic acid/Al of the polynuclear aluminum lactate compound, and the distance between the crosslinking points was decreased.

<Reference Production Examples>

Examples in which a polynuclear aluminum lactate compound was used as the crosslinking agent were compared with Examples in which various stabilizers were added to sodium aluminate as the comparative crosslinking agent.

(Experiment Nos. 12A to 14A)

An evaluation test for each physical property was carried out in the same manner as in Experiment No. 4, except that the dip molding composition obtained by pH adjustment was stored with stirring under environmental conditions for each of 3 days, 4 days, and 5 days. Furthermore, for the polynuclear aluminum lactate compound, the molar ratio of Al to the lactic acid residues was set to 1:0.8 to prepare an inventive crosslinking agent 1A.

(Experiment Nos. 15A to 17A)

Sodium aluminate was used as the comparative crosslinking agent and sodium lactate was used as the stabilizer (comparative crosslinking agent 1A). An evaluation test for each physical property was carried out in the same manner as in Production Example 1, except that with regard to other conditions, the dip molding composition obtained by pH adjustment was stored with stirring under environmental conditions for each of 3 days, 4 days, and 5 days. A comparative crosslinking agent 1A was prepared as follows. 10.0 grams of weighed sodium aluminate manufactured by FUJIFILM Wako Pure Chemical Industries, Ltd. was dissolved in 50.0 grams of pure water. 18.2 g of a 60% aqueous sodium lactate solution manufactured by Kanto Chemical Co., Inc. was added thereto and diluted with pure water so as to have a concentration of 3.6% in terms of aluminum oxide to obtain a comparative crosslinking agent 1A.

(Experiment Nos. 18A to 20A)

An evaluation test for each physical property was carried out in the same manner as in Experiment Nos. 15A to 17A, except that with regard to other conditions, sodium aluminate was used as the comparative crosslinking agent and sodium glycolate was used as the stabilizer (comparative crosslinking agent 2A). The comparative crosslinking agent 2A was prepared as follows. The comparative crosslinking agent 2A was obtained in the same manner as for the comparative crosslinking agent 1A, except that a mixture of 10.6 grams of a 70% aqueous glycolic acid solution manufactured by Kanto Chemical Co., Inc. and 11.0 grams of a 50% aqueous potassium hydroxide solution was used instead of the 60% aqueous sodium lactate solution.

(Experiment Nos. 21A to 23A)

An evaluation test for each physical property was carried out in the same manner as in Experiment Nos. 15A to 17A, except that with regard to other conditions, sodium aluminate was used as the comparative crosslinking agent and sorbitol was used as the stabilizer (comparative crosslinking agent 3A). The comparative crosslinking agent 3A was prepared as follows. The comparative crosslinking agent 3A was obtained in the same manner as for the comparative crosslinking agent 1A, except that 35.6 grams of a 50% aqueous sorbitol solution manufactured by Kanto Chemical Co., Inc. was used instead of the 60% aqueous sodium lactate solution.

(Experiment Nos. 24A to 26A)

An evaluation test for each physical property was carried out in the same manner as in Experiment Nos. 15A to 17A, except that with regard to other conditions, sodium aluminate was used as the comparative crosslinking agent and polyethylene glycol 400 was used as the stabilizer (comparative crosslinking agent 4A). The comparative crosslinking agent 4A was prepared as follows. The comparative crosslinking agent 4A was obtained in the same manner as for the comparative crosslinking agent 1A, except that 29.4 grams of polyethylene glycol 400 manufactured by Kanto Chemical Co., Inc. was used instead of the 60% aqueous sodium lactate solution.

<Evaluation of Reference Production Examples>

The results of each physical property test of the cured films of Experiment Nos. 12A to 26A are shown in Table 9 below.

[Table 9]

| Experiment No. | | | 12A | 13A | 14A | 15A | 16A | 17A | 18A | 19A | 20A | 21A | 22A | 23A | 24A | 25A | 26A |
|---|---|---|---|---|---|---|---|---|---|---|---|---|---|---|---|---|---|
| | | | Inventive crosslinking agent 1A | | | Comparative crosslinking agent 1A | | | Comparative crosslinking agent 2A | | | Comparative crosslinking agent 3A | | | Comparative crosslinking agent 3A4 | | |
| Type of latex | | | 830 | | | 830 | | | 830 | | | 830 | | | 830 | | |
| Crosslinking agent, molar ratio | | | Polynuclear luminum lactate compound | | | $NaAlO_2$, 1 | | | $NaAlO_2$, 1 | | | $NaAlO_2$, 1 | | | $NaAlO_2$, 1 | | |
| Stabilizer, molar ratio | | | | | | Na lactate, 0.8 | | | Na glycolate, 0.8 | | | Sorbitol, 0.8 | | | PEG400, 0.8 | | |
| Addition amount of crosslinking agent | | | 0.5 | | | 0.5 | | | 0.5 | | | 0.5 | | | 0.5 | | |
| Maturation time (days) | | | 3 | 4 | 5 | 3 | 4 | 5 | 3 | 4 | 5 | 3 | 4 | 5 | 3 | 4 | 5 |
| Film thickness (mm) | | | 0.075 | 0.079 | 0.077 | 0.077 | 0.079 | 0.076 | 0.078 | 0.080 | 0.077 | 0.078 | 0.076 | 0.077 | 0.080 | 0.079 | 0.077 |
| Physical properties of film | Tensile strength (MPa) | | 43.7 | 43.1 | 38.7 | 35.1 | 33.6 | 34.9 | 33.8 | 33.6 | 32.0 | 32.6 | 32.5 | 29.5 | 35.3 | 34.7 | 30.9 |
| | Tensile elongation (%) | | 684 | 674 | 629 | 605 | 589 | 571 | 605 | 604 | 565 | 603 | 587 | 560 | 622 | 633 | 589 |
| | Modulus (MPa) | 100% | 2.21 | 2.28 | 2.70 | 2.99 | 3.03 | 3.68 | 2.87 | 2.94 | 3.50 | 2.73 | 2.86 | 3.22 | 2.67 | 2.66 | 3.12 |
| | | 300% | 5.97 | 6.23 | 6.83 | 9.19 | 9.41 | 10.45 | 9.04 | 9.10 | 9.98 | 8.72 | 9.19 | 9.38 | 8.30 | 8.17 | 8.72 |
| | | 500% | 15.91 | 16.84 | 18.96 | 22.93 | 23.27 | 26.01 | 22.07 | 22.12 | 24.38 | 21.46 | 22.73 | 22.76 | 20.90 | 20.12 | 21.09 |
| | Fatigue durability (min) | | 172 | 295 | 242 | 42 | 66 | 39 | 57 | 68 | 44 | 109 | 138 | 109 | 66 | 129 | 61 |
| | Stress retention rate (%) | | 48.8 | 49.1 | 50.1 | 53.1 | 52.8 | 53.0 | 52.2 | 53.5 | 54.2 | 56.2 | 55.9 | 54.7 | 54.4 | 53.3 | 55.2 |

From these results, it can be seen that the cured films (Experiment Nos. 12A to 14A) manufactured using the polynuclear aluminum lactate compound as the aluminum crosslinking agent for dip molding have better tensile strength, elongation, modulus (softness), and fatigue durability than those of the cured films (Experiment Nos. 15A to 26A) manufactured using other sodium aluminate-starting crosslinking agents and stabilizers.

[Industrial Applicability]

Since a molded body such as gloves obtained from the dip molding composition including the polynuclear aluminum lactate compound of the present invention has remarkably excellent fatigue durability and is soft despite having high tensile strength and tensile elongation, the dip molding composition of the present invention is expected to be widely used in the field of rubber molded bodies such as rubber gloves in the future.

## Claims

**1.** An aluminum crosslinking agent for dip molding, comprising a polynuclear aluminum lactate compound,

wherein the polynuclear aluminum lactate compound has a polynuclear aluminum structure and at least one lactic acid residue,
the polynuclear aluminum structure has a structure where a plurality of aluminum atoms are polymerized through one oxygen atom, and has a degree of polymerization of 2 to 20, and
lactic acid residues or hydroxyl groups are bonded to remaining valences of the aluminum atom.

**2.** The aluminum crosslinking agent for dip molding according to Claim 1, wherein the degree of polymerization is 2 to 10.

**3.** The aluminum crosslinking agent for dip molding according to Claim 1 or 2,
wherein in the case where the aluminum atom has two remaining valences, the lactic acid residues are bonded to one or more of the remaining valences.

**4.** The aluminum crosslinking agent for dip molding according to any one of Claims 1 to 3,
wherein a molar ratio of the aluminum atoms to the lactic acid residues is 1:0.5 to 1:2.0.

**5.** A dip molding composition having a pH of 8.5 to 10.5, the dip molding composition comprising:

at least the aluminum crosslinking agent for dip molding according to any one of Claims 1 to 4;
a copolymer elastomer;
a pH adjuster; and
water,
wherein the copolymer elastomer includes 20% to 35% by mass of (meth)acrylonitrile-derived structural units, 1.5% to 6% by mass of ethylenically unsaturated carboxylic acid-derived structural units, and 59% to 78.5% by mass of butadiene-derived structural units.

**6.** The dip molding composition according to Claim 5, further comprising an organic crosslinking agent or zinc oxide.

**7.** The dip molding composition according to Claim 5 or 6,
wherein the aluminum crosslinking agent for dip molding is included in an amount of 0.2 to 1.3 parts by mass in terms of aluminum oxide with respect to 100 parts by mass of the copolymer elastomer.

**8.** Gloves formed by molding a constituent material including the dip molding composition according to any one of Claims 5 to 7.

**9.** A method for producing the gloves according to Claim 8, comprising:

(1) a coagulant-attaching step of attaching a coagulant to a glove mold;
(2) a maturing step of preparing and stirring a dip molding composition;
(3) a dipping step of immersing the glove mold in the dip molding composition;
(4) a gelling step of gelling a film formed on the glove mold to make a cured film precursor;
(5) a leaching step of removing impurities from the cured film precursor formed on the glove mold;

(6) a beading step of making rolls around cuffs of the gloves formed by the steps; and
(7) a curing step of heating the gloves to be subjected to a crosslinking reaction and drying,

wherein steps (3) to (7) are performed in this order.

FIG. 1

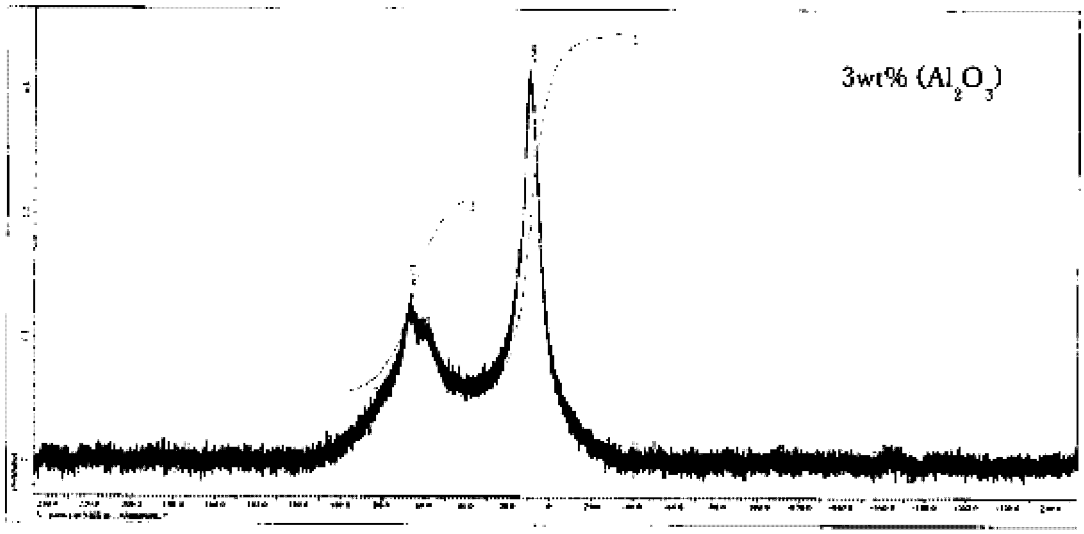


FIG. 2

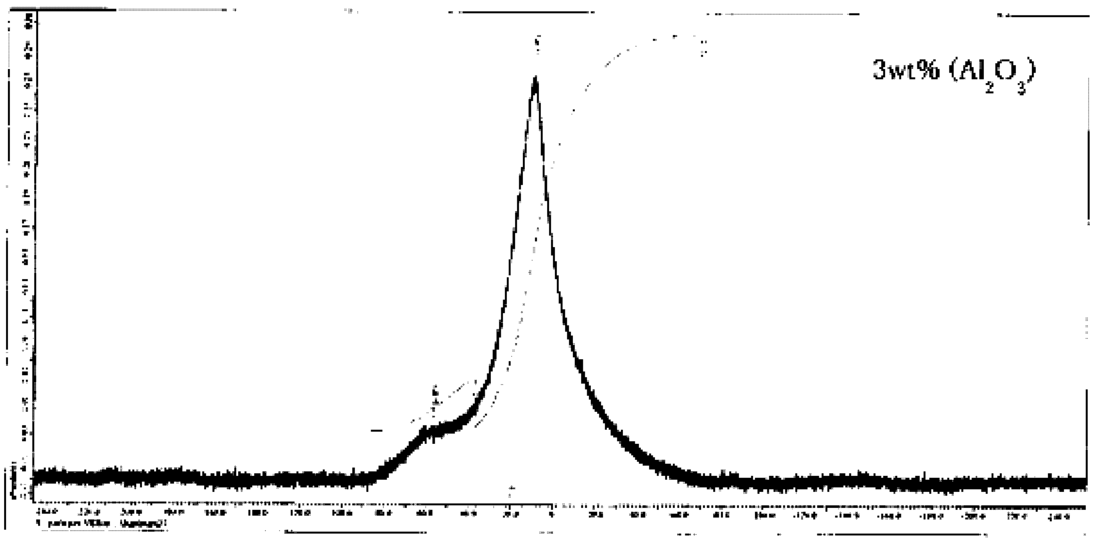

FIG. 3

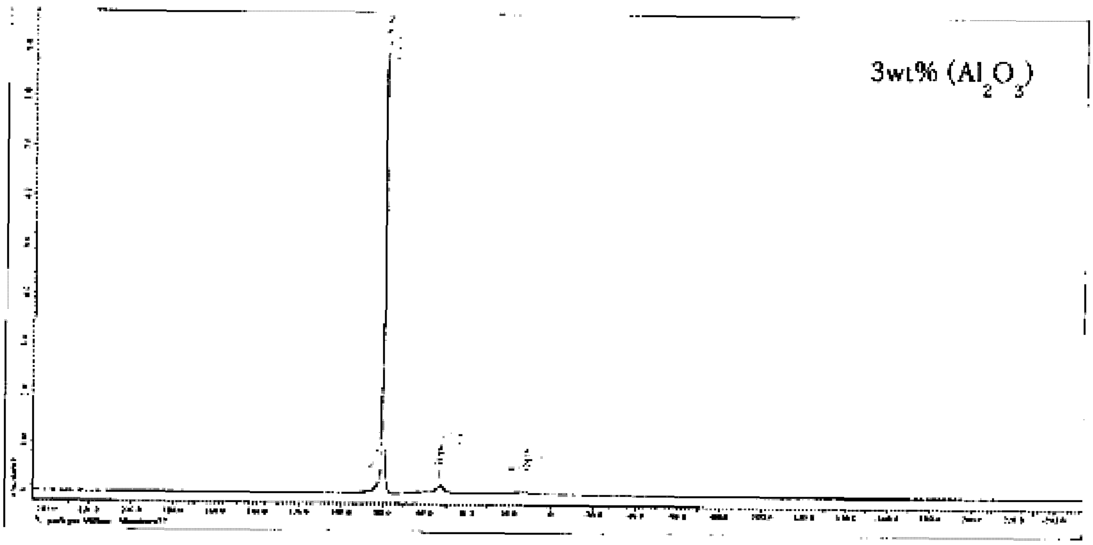


FIG. 4

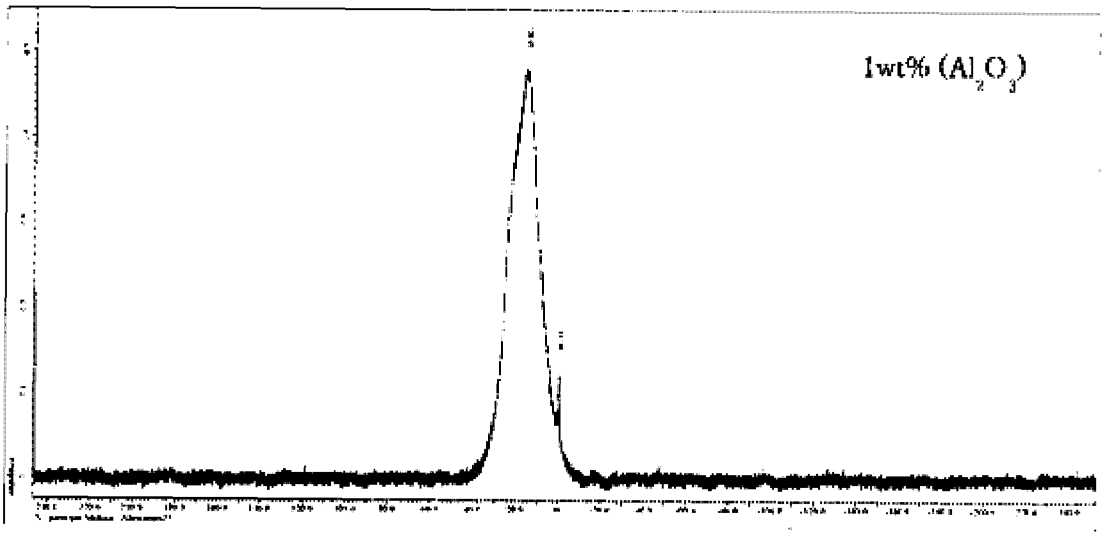

FIG. 5

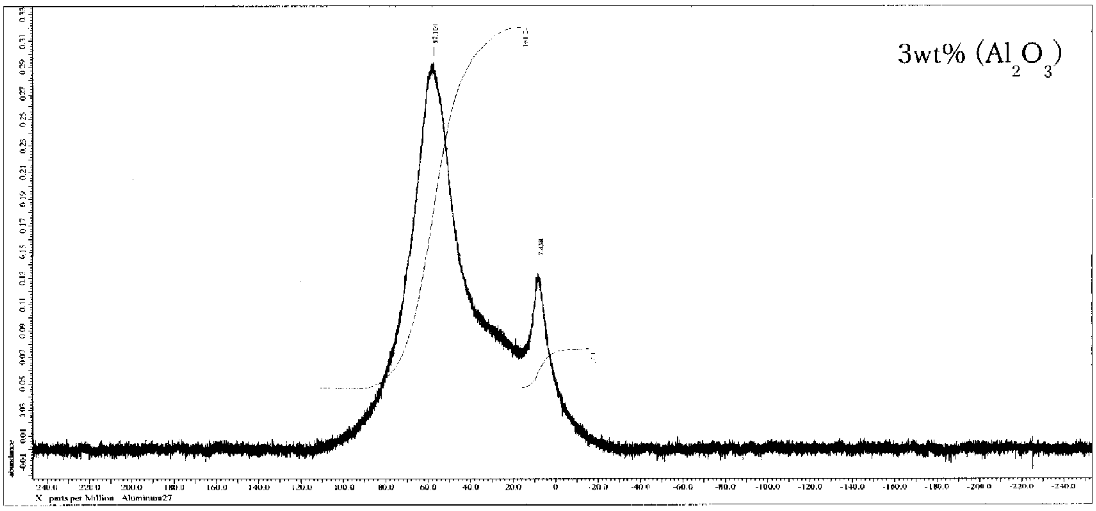
3wt% ($Al_2O_3$)
X : parts per Million : Aluminum27
abundance

FIG. 6

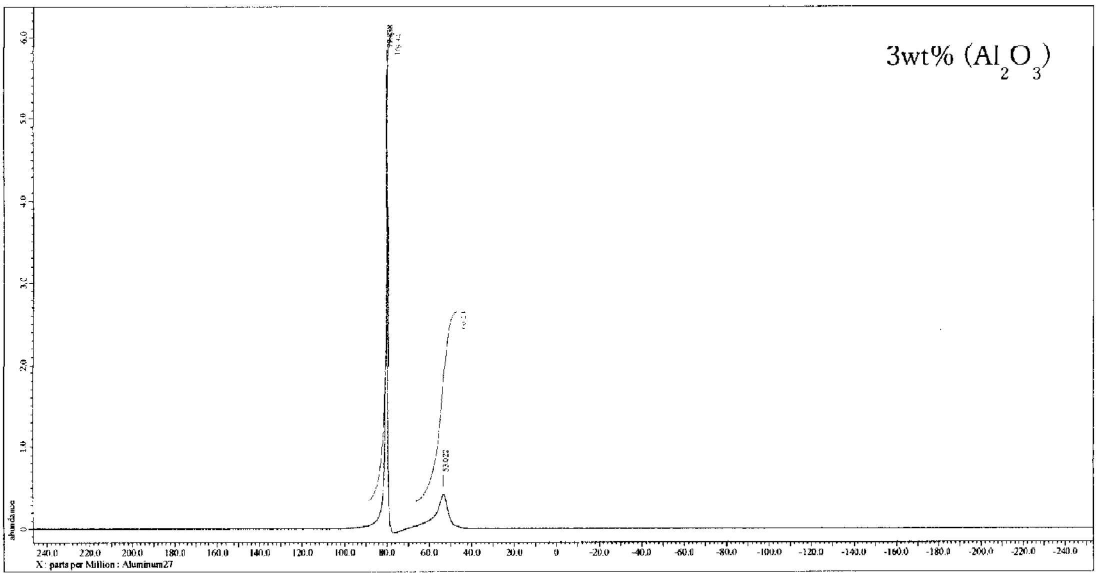
3wt% ($Al_2O_3$)
X : parts per Million : Aluminum27
abundance

FIG. 7

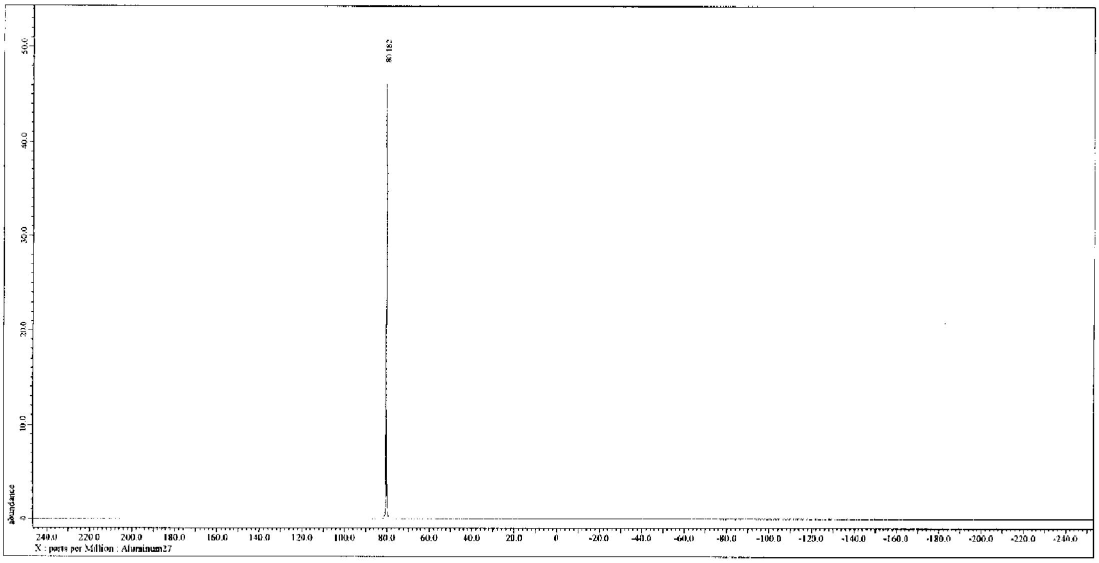
80.182
abundance
X : parts per Million : Aluminum27

FIG. 8

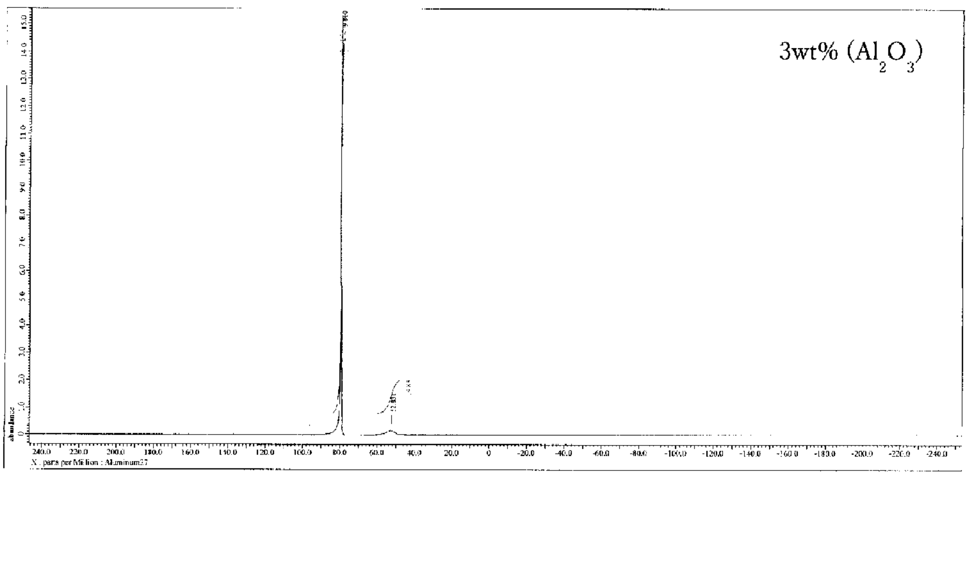
3wt% (Al2O3)
abundance
X : parts per Million : Aluminum27

FIG. 9

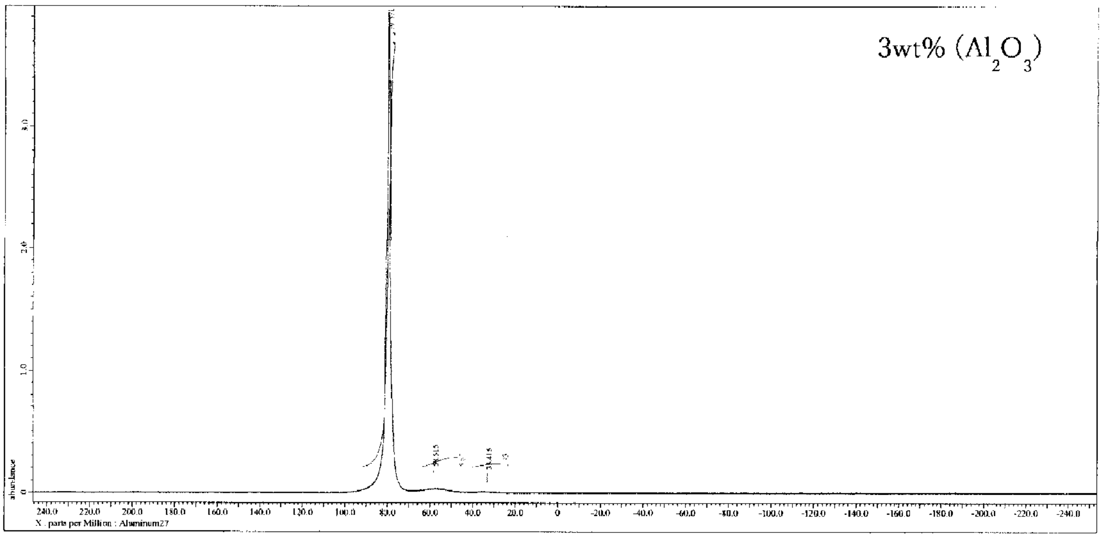
3wt% ($Al_2O_3$)
X : parts per Million : Aluminum27
abundance

FIG. 10

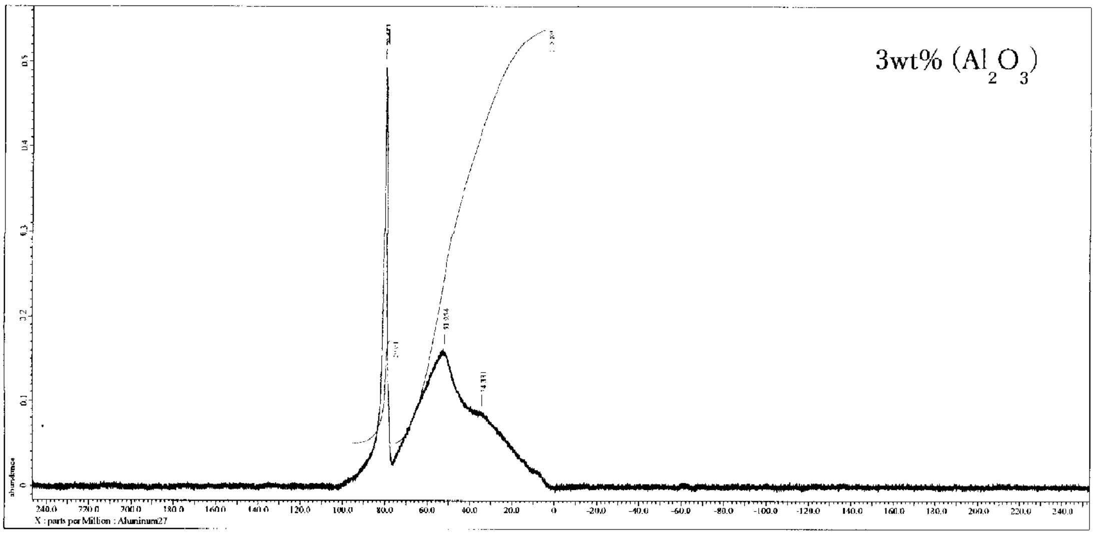
3wt% ($Al_2O_3$)
X : parts per Million : Aluminum27
abundance

FIG. 11

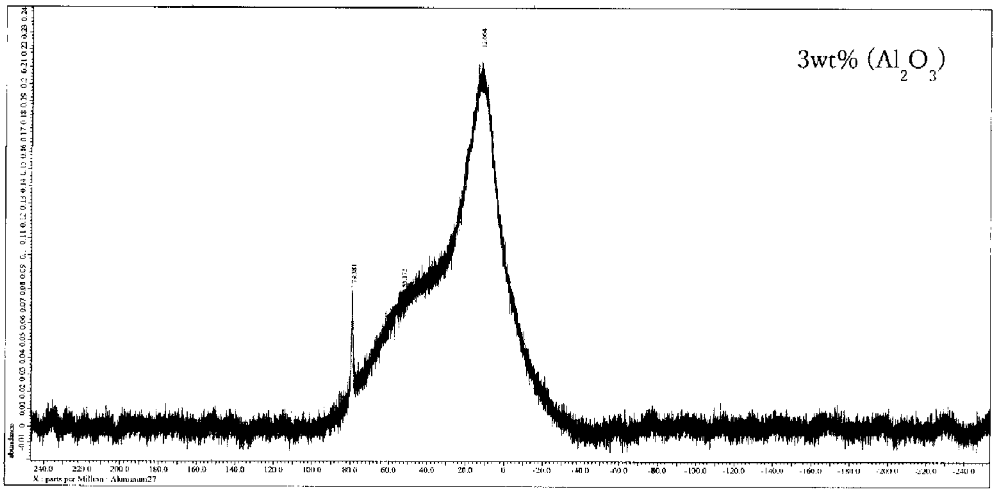
3wt% ($Al_2O_3$)

FIG. 12

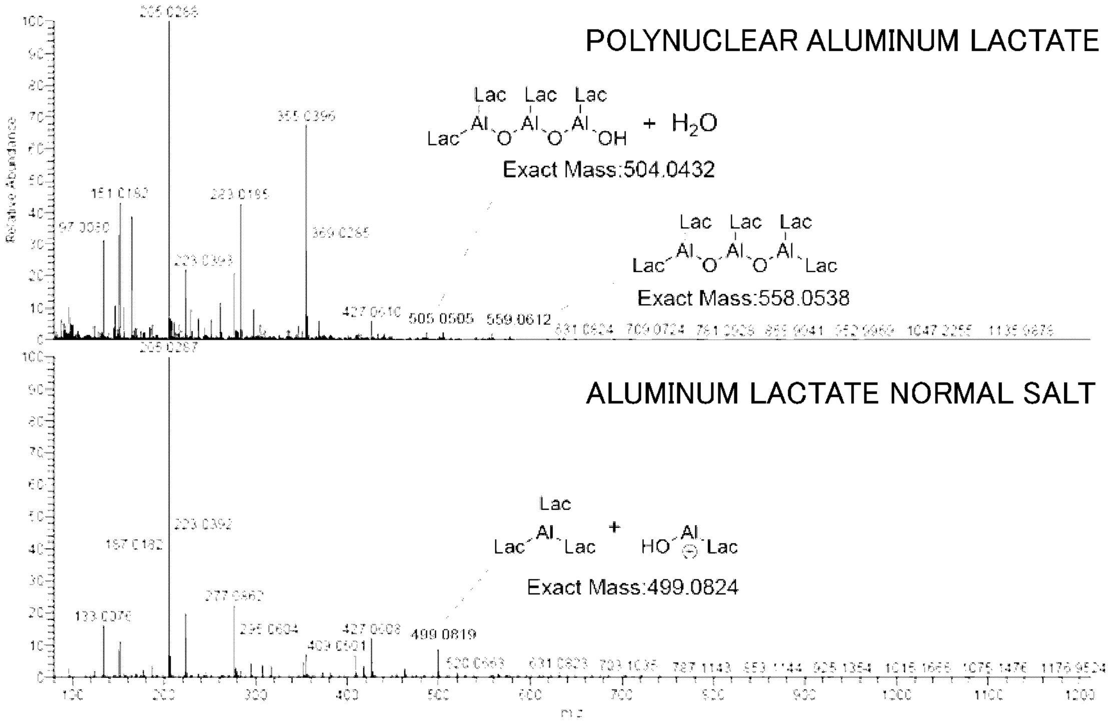
POLYNUCLEAR ALUMINUM LACTATE
+ $H_2O$
Exact Mass:504.0432
Exact Mass:558.0538
ALUMINUM LACTATE NORMAL SALT
+
Exact Mass:499.0824
Relative Abundance
m/z

FIG. 13

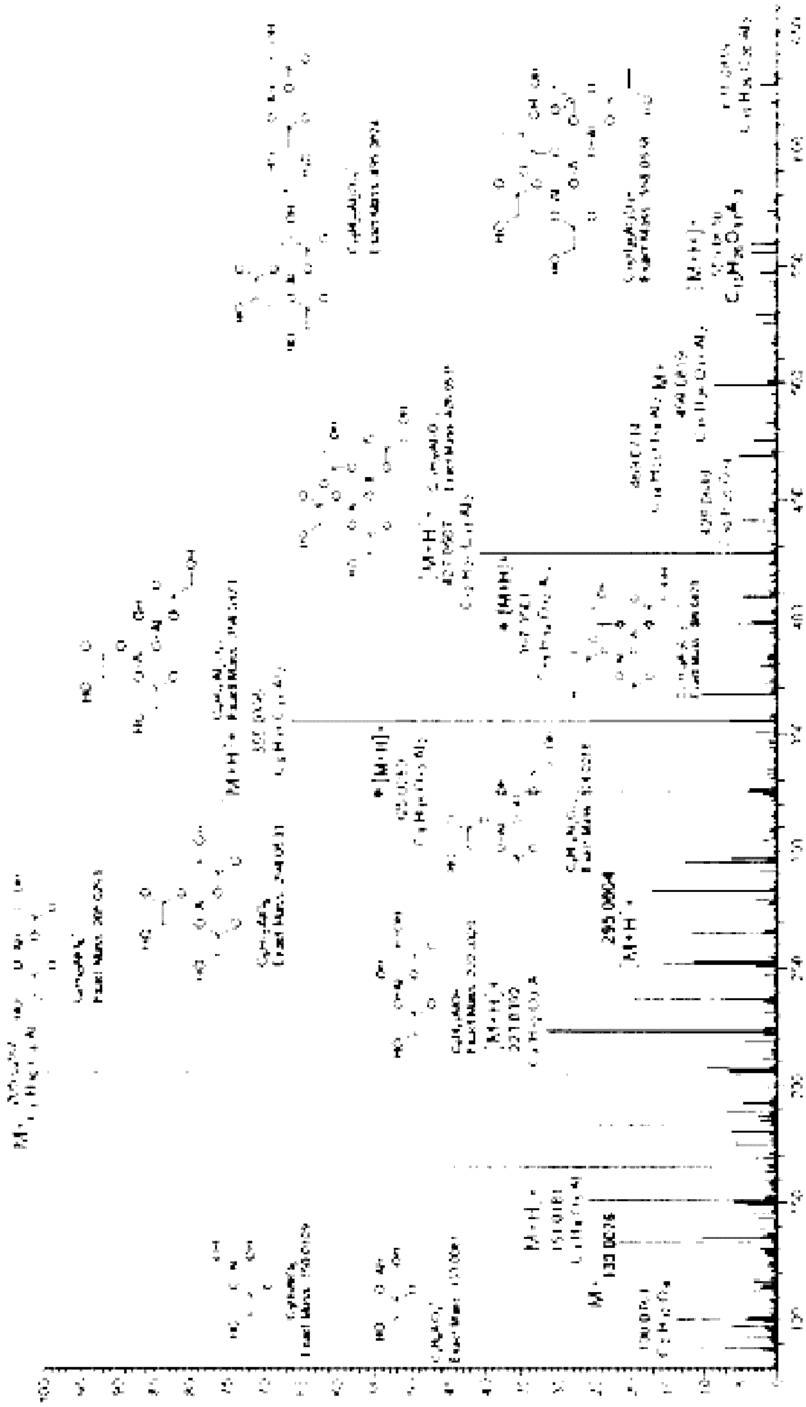

**INTERNATIONAL SEARCH REPORT**

International application No.
**PCT/JP2022/003838**

**A. CLASSIFICATION OF SUBJECT MATTER**

***B29C 41/14***(2006.01)i; ***C08K 5/098***(2006.01)i; ***C08L 13/00***(2006.01)i; ***A41D 19/04***(2006.01)i
FI: C08L13/00; C08K5/098; B29C41/14; A41D19/04 B

According to International Patent Classification (IPC) or to both national classification and IPC

**B. FIELDS SEARCHED**

Minimum documentation searched (classification system followed by classification symbols)

B29C41/14; C08K5/098; C08L13/00; A41D19/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 8-301668 A (TAKI CHEMICAL CO., LTD.) 19 November 1996 (1996-11-19) entire text | 1-9 |
| A | WO 00/73367 A1 (SUZUKI LATEX INDUSTRY CO., LTD.) 07 December 2000 (2000-12-07) entire text, all drawings | 1-9 |
| A | WO 2008/001764 A1 (FOUR ROAD RESEARCH LTD.) 03 January 2008 (2008-01-03) entire text | 1-9 |
| A | JP 2009-138194 A (BANGKOK SYNTHETICS CO., LTD.) 25 June 2009 (2009-06-25) entire text | 1-9 |
| A | JP 2010-209163 A (FOUR ROAD RESEARCH LTD.) 24 September 2010 (2010-09-24) entire text | 1-9 |
| A | JP 2013-123848 A (MITSUBISHI PAPER MILLS LTD.) 24 June 2013 (2013-06-24) entire text | 1-9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 March 2022** | **05 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2022/003838

C. DOCUMENTS CONSIDERED TO BE RELEVANT

| Category* | Citation of document, with indication, where appropriate, of the relevant passages | Relevant to claim No. |
|---|---|---|
| A | WO 2018/110384 A1 (TAKI CHEMICAL CO., LTD.) 21 June 2018 (2018-06-21) entire text | 1-9 |

Form PCT/ISA/210 (second sheet) (January 2015)

**INTERNATIONAL SEARCH REPORT**
**Information on patent family members**

International application No.
**PCT/JP2022/003838**

| Patent document cited in search report | Publication date (day/month/year) | Patent family member(s) | Publication date (day/month/year) |
| --- | --- | --- | --- |
| JP 8-301668 A | 19 November 1996 | (Family: none) | |
| WO 00/73367 A1 | 07 December 2000 | US 2002/0101007 A1<br>entire text, all drawings<br>EP 1209186 A1<br>CN 1364180 A | |
| WO 2008/001764 A1 | 03 January 2008 | US 2008/0207809 A1<br>entire text | |
| JP 2009-138194 A | 25 June 2009 | US 2009/0292081 A1<br>entire text<br>CN 101456922 A<br>KR 10-2009-0060153 A<br>TW 200940611 A | |
| JP 2010-209163 A | 24 September 2010 | (Family: none) | |
| JP 2013-123848 A | 24 June 2013 | (Family: none) | |
| WO 2018/110384 A1 | 21 June 2018 | US 2019/0337814 A1<br>entire text | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6538093 B
- WO 2017146238 A
- JP 2018009272 A
- WO 2008001764 A
- JP 2010209163 A
- JP 2009138194 A